(19) Europäisches Patentamt
European Patent Office
Office européen des brevets

(11) EP 1 641 884 B1

(12) EUROPÄISCHE PATENTSCHRIFT

(45) Veröffentlichungstag und Bekanntmachung des Hinweises auf die Patenterteilung:
**03.10.2007 Patentblatt 2007/40**

(21) Anmeldenummer: **04736634.9**

(22) Anmeldetag: **11.06.2004**

(51) Int Cl.:
***C09B 67/00*** *(2006.01)*

(86) Internationale Anmeldenummer:
**PCT/EP2004/006298**

(87) Internationale Veröffentlichungsnummer:
**WO 2004/113454 (29.12.2004 Gazette 2004/53)**

(54) **verfahren zur behandlung von pigmenten in partikulärer form**

METHOD FOR TREATING PARTICULATE PIGMENTS

PROCEDE DE TRAITEMENT DE PIGMENTS SE PRESENTANT SOUS LA FORME DE PARTICULES

(84) Benannte Vertragsstaaten:
**AT BE BG CH CY CZ DE DK EE ES FI FR GB GR HU IE IT LI LU MC NL PL PT RO SE SI SK TR**

(30) Priorität: **25.06.2003 DE 10328716**
**04.07.2003 DE 10330412**
**02.09.2003 DE 10340777**

(43) Veröffentlichungstag der Anmeldung:
**05.04.2006 Patentblatt 2006/14**

(73) Patentinhaber: **BASF Aktiengesellschaft**
**67056 Ludwigshafen (DE)**

(72) Erfinder:
- **HEES, Ulrike**
  **68159 Mannheim (DE)**
- **KLUGE, Michael**
  **67071 Ludwigshafen (DE)**
- **RAULFS, Friedrich-Wilhelm**
  **68161 Mannheim (DE)**
- **SCHÖPKE, Holger**
  **69151 Neckargemünd (DE)**
- **SIEMENSMEYER, Karl**
  **67227 Frankenthal (DE)**
- **VAN GELDER, Richard**
  **67346 Speyer (DE)**
- **WEISER, Jürgen**
  **69198 Schriesheim (DE)**
- **HEISSLER, Heinz**
  **67227 Frankenthal (DE)**
- **ADAMS, Stefan**
  **67065 Ludwigshafen (DE)**
- **RENZ, Günter**
  **67251 Freinsheim (DE)**
- **SIMPSON, Paul, Andrew**
  **68239 Mannheim (DE)**

(56) Entgegenhaltungen:
**EP-A- 0 209 879** **EP-A- 1 245 653**
**WO-A-99/01516** **US-A- 3 133 893**
**US-A- 4 608 401** **US-B1- 6 569 231**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 641 884 B1

## Beschreibung

Die vorliegende Erfindung betrifft ein Verfahren zur Behandlung von Pigmenten in partikulärer Form, umfassend die folgenden Schritte:

a) Vermischen von Pigment in partikulärer Form mit mindestens einem nicht-ionischen oberflächenaktiven Stoff,
b) Dispergieren der so erhältlichen Mischung von Pigment in partikulärer Form und nicht-ionischem oberflächenaktiven Stoff in wässrigem Medium,
c) Polymerisieren mindestens eines ersten Monomers oder Copolymerisation einer ersten Mischung von Comonomeren in Gegenwart einer Dispersion nach b), wobei wasserunlösliches Polymer oder Copolymer an der Oberfläche der Pigmente in partikulärer Form gebildet wird,
d) Hinzufügen mindestens eines zweiten Monomers oder einer zweiten Mischung von Comonomeren und Polymerisation oder Copolymerisation.

Weiterhin betrifft die Erfindung die Verwendung der erfindungsgemäß behandelten Pigmente in partikulärer Form zur Herstellung von Farbmittelzubereitungen, insbesondere zur Herstellung von Tinten für das Ink-Jet-Verfahren sowie ein Verfahren zum Bedrucken von flächigen oder dreidimensional gestalteten Substraten, insbesondere textilen Substraten, im Ink-Jet-Verfahren, bei welchem die erfindungsgemäßen Tinten eingesetzt werden. Schließlich betrifft die vorliegende Erfindung Substrate, bedruckt mit den erfindungsgemäßen Tinten.

An Farbmittelzubereitungen, die in moderne Verfahren der Kolorierung von Substraten eingesetzt werden sollen, werden anspruchsvolle Anforderungen gestellt. Kolorierte Substrate sollen eine hohe Brillanz der Farben aufweisen, die Kolorierung soll dauerhaft sein, d.h. hohe Echtheiten aufweisen, wie beispielsweise Reibechtheit.

In besonderem Maße gelten die hohen Anforderungen für Farbmittelzubereitungen, die als oder zur Herstellung von Tinten dienen, die im Ink-Jet-Verfahren (Tintenstrahldruckverfahren wie Thermal Ink-Jet, Piezo Ink-Jet, Continuous Ink Jet, Valve Jet, Transferdruckverfahren) eingesetzt werden sollen. Sie müssen zum Drucken geeignete Viskosität und Oberflächenspannung aufweisen, sie müssen lagerstabil sein, d.h., sie sollen nicht koagulieren oder flokulieren, und sie dürfen nicht zur Verstopfung von Druckerdüsen führen, was insbesondere bei dispergierten, also nicht gelöste Farbmittelteilchen enthaltenden Tinten problematisch sein kann. Die Anforderungen an die Lagerstabilität dieser Tinten beinhaltet zusätzlich, dass sich die dispergierten Farbmittelteilchen nicht absetzen. Weiterhin müssen die Tinten im Falle des Continuous Ink Jet stabil gegen den Zusatz von Leitsalzen sein und bei Erhöhung des Ionengehalts keine Tendenz zum Ausflocken zeigen. Außerdem müssen die erhaltenen Drucke den koloristischen Anforderungen genügen, d.h. hohe Brillanz und Farbtiefe zeigen, und gute Echtheiten, z.B. Reibechtheit, Lichtechtheit, Wasserechtheit und Nassreibechtheit, Waschechtheit und Chemische Reinigungsbeständigkeit aufweisen.

Außerdem ist es erforderlich, dass Tinten auf dem Substrat schnell trocknen, damit zu druckende Bilder oder Schriftzüge nicht verlaufen und sich beispielsweise Tintentröpfchen verschiedener Farbe nicht vermischen. Dabei ist es zur Herstellung von gestochen scharfen Drucken erforderlich, dass nicht nur die Trocknungszeit der Drucke minimiert wird, sondern dass auch während der Zeit, in der die Tintentröpfchen auf dem zu bedruckenden Substrat stehen, diese Tröpfchen nicht verlaufen. Diese Fähigkeit der Tinte wird auch als Stand bezeichnet.

Reibechtheiten von Farbmittelzubereitungen und insbesondere Tinten für das Ink-Jet-Verfahren werden in vielen Fällen dadurch verbessert, dass man ein sogenanntes Bindemittel einsetzt, welches nach dem Druck appliziert wird oder als Zusatz zur Farbmittelzubereitung bzw. Tinte eingesetzt und mit der eigentlichen Farbmittelzubereitung bzw. Tinte verdruckt wird, s. beispielsweise WO 99/01516, S. 14 ff.

In einigen Fällen lässt sich jedoch die Brillanz bei Kolorierungen noch zu wünschen übrig. Dies gilt beispielsweise bei der Applizierung Bindemittel-haltiger Farbmittelzubereitungen, wenn man Trichromien zu erzeugen wünscht. Man beobachtet häufig eine Migration von Pigmenten nach der Applikation, und gestochen scharfe Bilder sind auf diese Weise entweder nicht ausreichend haltbar oder lassen sich gar nicht erst dauerhaft erzeugen. Außerdem lässt in einigen Fällen die Haptik von bedruckten Substraten noch verbessern, da es gewünscht ist, dass bedruckte Substrate und insbesondere textile Substrate einen angenehm weichen Griff haben und nicht durch das Bedrucken steif werden sollen.

Es gibt Versuche, Pigmente dadurch zu behandeln, dass man sie mit einem Polymer umhüllt. US 3,133,893 offenbart die Umhüllung von Pigmenten, die mit einem oberflächenaktiven Mittel behandelt wurden, mit in einem Polymerisationsschritt hergestelltem Polyacrylnitril, das in Gegenwart des Pigments synthetisiert wird. Die so umhüllten Pigmente lassen sich in Fasern einarbeiten. Zur Anwendung bei der Kolorierung von Substraten sind die haptischen Eigenschaften wie beispielsweise der Griff jedoch für moderne Anforderungen vielfach unbefriedigend.

US 4,608,401 offenbart ein Verfahren zur Verkapselung von Pigmenten für Latexfarben, bei dem Pigmentpartikel mit wasserunlöslichen Monomeren und einem Detergenz unter Bedingungen, bei denen keine Scherkräfte wirken, in Wasser dispergiert werden und anschließend den Bedingungen einer Emulsionspolymerisation unterworfen werden. Zur Anwendung bei der Kolorierung von Substraten sind die haptischen Eigenschaften wie beispielsweise der Griff jedoch für moderne Anforderungen vielfach unbefriedigend.

US 4,680,200 offenbart ein Verfahren zur Verkapselung von nicht vorbehandelten Pigmenten, bei dem Pigmentpartikel mit Styrol und dem Oligomer Polywet KX-3 der Fa. Uniroyal in Wasser dispergiert werden und anschließend den Bedingungen einer Emulsionspolymerisation unterworfen wird.

US 3,544,500 offenbart ein Verfahren zur Herstellung von mit speziellen Polymeren umhüllten Pigmenten, die dadurch hergestellt werden, dass wasserlösliche Polymere physikalisch am Polymer adsorbiert werden und danach eine nicht-solvatierte Ankerkomponente eingeführt wird. Die Verwendung wasserlöslicher Polymere zum Umhüllen von Pigmenten für Tinten für das Ink-Jet-Verfahren ist jedoch nicht von Vorteil, weil die Umhüllung bei längerer Lagerung der Tinte wieder abgelöst wird. Außerdem sind insbesondere bedruckte Textilien nicht hinreichend nass- und schweißecht, und die Waschechtheit ist ebenfalls in vielen Fällen nicht ausreichend.

US 4,608,401 beschreibt ein Verfahren zur Herstellung von umhüllten Pigmenten, welches auf solche Pigmente beschränkt ist, die keine ionischen Ladungen aufweisen. Die genannten Pigmente werden durch eine Suspensionspolymerisation eines Wasserunlöslichen Monomers umhüllt. Zur Anwendung bei der Kolorierung von Substraten sind die haptischen Eigenschaften wie beispielsweise der Griff jedoch für moderne Anforderungen vielfach unbefriedigend.

Aus EP-A 1 245 653 ist ein Verfahren zur Herstellung von Tinten für das Ink-Jet-Verfahren bekannt, gemäß dem Pigmentpartikel mit wasserlöslichen Monomeren wie beispielsweise Acrylsäure und gegebenenfalls weiteren Comonomeren vermischt und anschließend einer Emulsionspolymerisation unterworfen werden. Die Wasserechtheit und insbesondere die Waschechtheit von mit den offenbarten Tinten bedruckten Substraten ist in vielen Fällen nicht ausreichend.

Weiterhin betrifft die vorliegende Erfindung die Verwendung der erfindungsgemäß behandelten Pigmente in partikulärer Form zur Herstellung von Farbmittelzubereitungen, insbesondere für Zubereitungen zur Kolorierung von Leder. Weiterhin betrifft die vorliegende Erfindung ein Verfahren zur Kolorierung von Leder und koloriertes Leder, hergestellt unter Verwendung der erfindungsgemäß behandelten Pigmente in partikulärer Form. Schließlich betrifft die vorliegende Erfindung Schuhe, hergestellt aus erfindungsgemäßem kolorierten Leder.

Bei der Zurichtung wird Leder üblicherweise in mehreren Lagen beschichtet. Besonders häufig ist eine dreilagige Beschichtung, wobei die erste Beschichtung eine sogenannte Grundierung ist, die beispielsweise Pigmente, Bindemittel und Hilfsmittel zur Erzielung der Haftung der gesamten Zurichtung enthält. Als zweite Beschichtung verwendet man eine sogenannte Deckschicht, die meistens etwas härter eingestellt ist als die erste Schicht. Als dritte Schicht bringt man eine Appretur auf, die das endgültige Aussehen und den Griff entscheidend beeinflusst. Als Auftragsmethoden für alle Schichten dienen üblichere Beschichtungstechniken wie beispielsweise Spritzen, Streichen, Gießen, Drucken und Kaschieren.

Es bestand also die Aufgabe, ein Verfahren zur Behandlung von Pigmenten in partikulärer Form bereit zu stellen, welches die aus dem Stand der Technik bekannten Nachteile vermeidet. Weiterhin bestand die Aufgabe, behandelte Pigmente in partikulärer Form bereit zu stellen. Schließlich bestand die Aufgabe, Anwendungen für behandelte Pigmente in partikulärer Form bereit zu stellen.

Demgemäß wurde das eingangs definierte Verfahren gefunden.

Das erfindungsgemäße Verfahren geht aus von Pigmenten in partikulärer Form. Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Bevorzugt geht das erfindungsgemäße Verfahren von organischen Pigmenten aus.

Beispielhaft ausgewählte organische Pigmente sind

- Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63,112, 146,170,184, 210, 245 und 251; C.I. Pigment Yellow 1, 3, 73, 74, 65, 97, 151 und 183;
- Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
- Anthanthronpigmente: C.I. Pigment Red 168 (C.I. Vat Orange 3);
- Anthrachinonpigmente: C.I. Pigment Yellow 147 und 177; C.I. Pigment Violet 31;
- Anthrachinonpigmente: C.I. Pigment Yellow 147 und 177; C.I. Pigment Violet 31;
- Anthrapyrimidinpigmente: C.I. Pigment Yellow 108 (C.I. Vat Yellow 20);
- Chinacridonpigmente: C.I. Pigment Red 122, 202 und 206; C.I. Pigment Violet 19;

- Chinophthalonpigmente: C.I. Pigment Yellow 138;
- Dioxazinpigmente: C.I. Pigment Violet 23 und 37;
- Flavanthronpigmente: C.I. Pigment Yellow 24 (C.I. Vat Yellow 1);
- Indanthronpigmente: C.I. Pigment Blue 60 (C.I. Vat Blue 4) und 64 (C.I. Vat Blue 6);
- Isoindolinpigmente: C.I. Pigment Orange 69; C.I. Pigment Red 260; C.I. Pigment Yellow 139 und 185;
- Isoindolinonpigmente: C.I. Pigment Orange 61; C.I. Pigment Red 257 und 260; C.I. Pigment Yellow 109, 110, 173 und 185;
- Isoviolanthronpigmente: C. I. Pigment Violet 31 (C.I. Vat Violet 1);
- Metallkomplexpigmente: C.I. Pigment Yellow 117, 150 und 153; C.I. Pigment Green 8;
- Perinonpigmente: C.I. Pigment Orange 43 (C.I. Vat Orange 7); C.I. Pigment Red 194 (C.I. Vat Red 15);
- Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51; C.I. Pigment Red 216 (C.I. Vat Orange 4);
- Thioindigopigmente: C.I. Pigment Red 88 und 181 (C.I. Vat Red 1); C.I. Pigment Violet 38 (C.I. Vat Violet 3);
- Triarylcarboniumpigmente: C.I. Pigment Blue 1, 61 und 62; C.I. Pigment Green 1; C.I. Pigment Red 81, 81: 1 und 169; C.I. Pigment Violet 1, 2, 3 und 27; C.I. Pigment Black 1 (Anilinschwarz);
- C.I. Pigment Yellow 101 (Aldazingelb);
- C.I. Pigment Brown 22.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Man kann erfindungsgemäß auch von Mischungen von zwei oder mehr verschiedenen Pigmenten ausgehen, wobei vorzugsweise mindestens ein Pigment organisch ist. Man geht aus von Pigmenten, die in partikulärer Form vorliegen, d.h. in Form von Partikeln. Üblicherweise geht man sogenannten Rohpigmenten aus, das sind unbehandelte Pigmente, wie sie nach der Pigmentsynthese anfallen. Die Partikel können reguläre oder irreguläre Form aufweisen, beispielsweise können die Partikel in sphärischer oder annährend sphärischer Form oder in Nadelform vorliegen.

In einer Ausführungsform der vorliegenden Erfindung liegen die Partikel in sphärischer oder annährend sphärischer Form vor, d.h. das Verhältnis längster Durchmesser zu kleinster Durchmesser liegt im Bereich von 1,0 bis 2,0, bevorzugt bis 1,5.

Das oder die Pigmente in partikulärer Form werden in Schritt a) mit mindestens einem nicht-ionischen oberflächenaktiven Stoff vermischt.

Beispiele für geeignete nicht-ionische oberflächenaktive Stoffe sind z.B. ethoxylierte Mono-, Di- und Tri-Alkylphenole (Ethoxylierungsgrad: 3 bis 50, Alkylrest: $C_3$-$C_{12}$) sowie ethoxylierte Fettalkohole (EO-Grad: 3 bis 80; Alkylrest: $C_8$-$C_{36}$). Beispiele hierfür sind die Lutensol®-Marken der BASF AG oder die Triton®-Marken der Union Carbide. Besonders bevorzugt sind ethoxylierte lineare Fettalkohole der allgemeinen Formel III

$$n\text{-}C_xH_{2x+1}\text{-}O(CH_2CH_2O)_y\text{-}H, \qquad III$$

wobei x ganze Zahlen im Bereich von 10 bis 24, bevorzugt im Bereich von 12 bis 20 sind. Die Variable y steht vorzugsweise für ganze Zahlen im Bereich von 5 bis 50, besonders bevorzugt 8 bis 40.

Ethoxylierte lineare Fettalkohole der allgemeinen Formel III liegen üblicherweise als Gemisch verschiedener ethoxylierter Fettalkohole mit unterschiedlichem Ethoxylierungsgrad vor. Die Variable y steht im Rahmen der vorliegenden Erfindung für den Mittelwert (Zahlenmittel).

Das Vermischen von Pigment in partikulärer Form und mindestens einem nicht-ionischen oberflächenaktiven Stoff erfolgt in zum Vermischen geeigneten Geräten, vorzugsweise in Mühlen wie beispielsweise Kugelmühlen oder Rührwerkskugelmühlen. Besonders geeignet ist die Kugelmühle Drais Superflow DCP SF 12.

Als geeignete Zeitdauer für das Vermischen haben sich beispielsweise ½ Stunde bis 48 Stunden erwiesen, obwohl auch eine längere Zeitdauer denkbar ist. Bevorzugt ist eine Zeitdauer für das Vermischen von 5 bis 24 Stunden.

Druck- und Temperaturbedingungen beim Vermischen sind im Allgemeinen unkritisch, so hat sich beispielsweise Normaldruck als geeignet erwiesen. Als Temperaturen haben sich beispielsweise Temperaturen im Bereich von 10°C bis 100°C als geeignet erwiesen.

Das Mengenverhältnis von Pigment zu nicht-ionischem oberflächenaktiven Stoff kann in weiten Bereichen gewählt werden und beispielsweise im Bereich von 10:1 bis 2:1 liegen.

Während der Durchführung von Schritt a) kann man Wasser zusetzen. Auch kann man übliche nicht-ionische Mahlhilfsmittel zusetzen.

Der mittlere Durchmesser der Pigmente liegt nach Schritt a) üblicherweise im Bereich von 20 nm bis 1,5 μm, bevorzugt im Bereich von 50 bis 200 nm, besonders bevorzugt 100 nm.

In Schritt b) dispergiert man die nach Schritt a) erhältliche Mischung von Pigment in partikulärer Form und nicht-ionischem oberflächenaktivem Stoff in wässrigem Medium. Zur Dispergierung kann man beliebige Vorrichtungen verwenden, beispielsweise gerührte Kessel oder gerührte Kolben.

Unter wässrigen Medien werden im Sinne der vorliegenden Erfindung solche flüssigen Medien verstanden, die Wasser als wichtige Komponente enthalten, beispielsweise mindestens 40 Gew.-%, bevorzugt mindestens 55 Gew.-%.

In Schritt b) liegt das Gewichtsverhältnis Mischung aus Pigmentpartikeln und nicht-ionischem oberflächenaktiven Stoff zu wässrigem Medium im Allgemeinen im Bereich von 1:1,5 bis 1:15, bevorzugt 1:2,5 bis 1:9.

Druck und Temperaturbedingungen für Schritt b) sind im Allgemeinen unkritisch, so sind beispielsweise Temperaturen im Bereich von 5 bis 100°C geeignet, bevorzugt 20 bis 85°C und Drücke im Bereich von Normaldruck bis 10 bar.

Durch das Dispergieren nach Schritt b) erhält man eine Dispersion.

In Schritt c) polymerisiert man mindestens ein erstes Monomer oder copolymerisiert eine erste Mischung von Comonomer in Gegenwart einer Dispersion, erhältlich nach b), wobei wasserunlösliches Polymer bzw. Copolymer an der Oberfläche der Pigmentpartikel gebildet wird.

Zur Durchführung von Schritt c) gibt man mindestens ein Monomer oder mindestens eine Mischung von Comonomeren zu einer nach b) erhältlichen Dispersion. Die Zugabe kann beispielsweise in einer Portion, in mehreren Portionen oder auch kontinuierlich erfolgen. Wenn man mindestens verschiedene Monomere miteinander copolymerisieren möchte, kann man zunächst ein Comonomer zugeben und danach das zweite und gegebenenfalls weitere Comonomere. In einer anderen Ausführungsform gibt man alle Comonomere in einer Portion zu.

Monomer bzw. Comonomere kann man in Substanz oder in wässriger Dispersion zugeben.

Als Monomere bzw. Comonomere in Schritt c) wählt man solche Monomere bzw. Comonomere, die in Wasser schlecht löslich sind. Unter schlecht in Wasser löslichen Monomeren bzw. Comonomeren werden dabei solche Monomeren bzw. Comonomeren verstanden, deren Löslichkeit in Wasser bei 50°C 1 x $10^{-1}$ mol/l oder weniger beträgt.

Bevorzugte Beispiele für Monomere bzw. Comonomere in Schritt c) sind vinylaromatische Verbindungen und schlecht in Wasser lösliche α,β-ungesättigte Carbonsäurederivate.

Vorzugsweise wird als vinylaromatische Verbindung mindestens eine Verbindung der allgemeinen Formel IV gewählt,

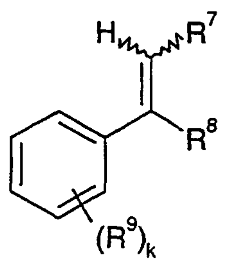

IV

in der $R^7$ und $R^8$ unabhängig voneinander jeweils für Wasserstoff, Methyl oder Ethyl stehen, $R^9$ Methyl oder Ethyl bedeutet und k eine ganze Zahl von 0 bis 2 bedeutet; ganz besonders bevorzugt sind $R^7$ und $R^8$ jeweils Wasserstoff, und ganz besonders bevorzugt gilt k = 0.

Vorzugsweise wird als schlecht in Wasser lösliches α,β-ungesättigtes Carbonsäurederivat eine Verbindung der allgemeinen Formel I gewählt,

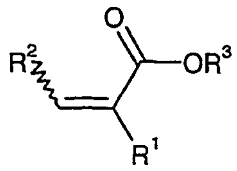

I

in der die Variablen wie folgt definiert sind:

$R^1$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl;
- oder Wasserstoff,
- ganz besonders bevorzugt sind Wasserstoff und Methyl;

$R^2$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl;
- oder ganz besonders bevorzugt Wasserstoff.

$R^3$ gewählt aus unverzweigtem oder verzweigtem $C_4$-$C_{10}$-Alkyl, wie n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; ganz besonders n-Butyl und 2-Ethylhexyl.

In einer Ausführungsform der vorliegenden Erfindung liegt das Verhältnis von Pigment zu Menge an Monomer bzw. Comonomeren in Schritt c) im Bereich von 3:1 bis 1:2, bevorzugt im Bereich 2:1 bis 1:1,5.

Man kann im Schritt c) Gemische der vorgenannten Monomere einsetzen. Beispielsweise sind Mischungen aus Styrol und Acrylsäure-n-butylester sehr gut geeignet, wobei das Mischungsverhältnis beliebig ist.

Vorzugsweise polymerisiert man unter den Bedingungen einer Emulsionspolymerisation. Dabei kommen ganz besonders bevorzugt sogenannte "starved conditions" in Frage, d.h. man setzt nur wenig oder vorzugsweise kein Netzmittel zu. So erhält man keine messbaren Anteile an stabilisierten Tröpfchen von erstem Monomer bzw. erstem Gemisch an Comonomeren, und der Anteil an Netzmittel dient zum Netzen der Pigmentoberfläche und zum Transport von erstem Monomer bzw. erstem Gemisch an Comonomeren durch die kontinuierliche wässrige Phase. Als Netzmittel sind beispielsweise organische Schwefelverbindungen geeignet, beispielsweise Alkylsulfate, Alkylsulfonate, Alkylarylsulfonate, Alkylethersulfate, Alkylarylethersulfate, Sulfosuccinate wie Sulfobernsteinsäurehalbester und Sulfobernsteinsäurediester; weiterhin sind organische Phosphorverbindungen wie beispielsweise Alkyletherphosphate geeignet.

Üblicherweise polymerisiert man unter Verwendung mindestens eines Initiators. Mindestens ein Initiator kann ein Peroxid sein. Beispiele für geeignete Peroxide sind Alkalimetallperoxodisulfate, z.B. Natriumperoxodisulfat, Ammoniumperoxodisulfat, Wasserstoffperoxid, organische Peroxide wie Diacetylperoxid, Di-tert.-butylperoxid, Diamylperoxid, Dioctanoylperoxid, Didecanoylperoxid, Dilauroylperoxid, Dibenzoylperoxid, Bis-(o-toloyl)peroxid, Succinylperoxid, tert.-Butylperacetat, tert.-Butylpermaleinat, tert.-Butylperisobutyrat, tert.-Butylperpivalat, tert.-Butylperoctoat, tert.-Butylperneodecanoat, tert.-Butylperbenzoat, tert.-Butylperoxid, tert.-Butylhydroperoxid, Cumolhydroperoxid, tert.-Butylperoxi-2-ethylhexanoat und Diisopropylperoxidicarbamat. Geeignet sind auch Azoverbindungen wie beispielsweise Azobisisobutyronitril, Azobis(2-amidopropan)dihydrochlorid und 2,2'-Azobis(2-methylbutyronitril).

Redoxinitiatoren sind ebenfalls geeignet, beispielsweise aus Peroxiden und oxidierbarer Schwefelverbindung. Ganz besonders bevorzugt sind Systeme aus Acetonbisulfit und organischem Peroxid wie tert.-$C_4H_9$-OOH, $Na_2S_2O_5$ (Natriumdisulfit) und organischem Peroxid wie tert.-$C_4H_9$-OOH oder von einer Kombination Alkalisalz von $HO-CH_2SO_2H$ und organischem Peroxid wie tert.-$C_4H_9$-OOH. Auch sind Systeme wie beispielsweise Ascorbinsäure/$H_2O_2$ besonders bevorzugt.

Als Polymerisationstemperatur kann man Temperaturen im Bereich von 20 bis 100°C, bevorzugt 50 bis 85°C wählen. Die gewählte Temperatur ist abhängig von der Zerfallscharakteristik des verwendeten Initiators.

Dir Druckbedingungen sind im Allgemeinen unkritisch, geeignet sind beispielsweise Drücke im Bereich von Normaldruck bis 10 bar.

Als Zeitdauer für Schritt c) haben sich beispielsweise 1 bis 30 Minuten als geeignet erwiesen, bevorzugt 2 bis 10 Minuten und besonders bevorzugt 3 bis 5 Minuten.

Natürlich kann man der Reaktionsmischung weitere Zusatzstoffe beifügen, die in der Emulsionspolymerisation üblich sind, beispielsweise Glykole, Polyethylenglykole, Schutzkolloide, Puffer/pH-Wert-Regulatoren, Molekulargewichtsregler und Kettenübertragungsinhibitoren.

Man erhält nach Schritt c) mit Polymer bzw. Copolymer umhülltes Pigment in partikulärer Form, das in Form isolierter Partikel anfällt. Man beobachtet keine messbaren oder nur äußerst geringe Anteile an Agglomeraten, beispielsweise weniger als 2 Gew.-%, bevorzugt weniger als 0,2 Gew.-%.

Das in Schritt c) an der Oberfläche des Pigments in partikulärer Form gebildete Polymer bzw. Copolymer ist wasserunlöslich.

Man kann in einem weiteren Schritt die nach c) erhältlichen dispergierten mit Polymer bzw. Copolymer umhüllten Pigmentpartikel durch Reinigungsoperationen, beispielsweise Filtrieren, Dekantieren, Waschen isolieren und zur Ausübung von Schritt d) des erfindungsgemäßen Verfahrens redispergieren. Vorzugsweise verarbeitet man jedoch die nach c) erhältlichen dispergierten mit Polymer bzw. Copolymer umhüllten Pigmentpartikel *in situ* weiter.

In Schritt d) des erfindungsgemäßen Verfahrens fügt man mindestens ein zweites Monomer oder eine zweite Mischung von Comonomeren zu der Dispersion aus Schritt c) oder den aufgearbeiteten und redispergierten umhüllten Pigmenten und polymerisiert bzw. copolymerisiert.

Dabei spricht man im Zusammenhang mit der vorliegenden Erfindung auch dann von einer zweiten Mischung von Comonomeren in Schritt d), wenn man in Schritt c) ein Monomer eingesetzt hat und in Schritt d) ein Gemisch aus zwei Comonomeren zusetzt. Gleichfalls spricht man im Zusammenhang mit der vorliegenden Erfindung auch dann von einem zweiten Monomer in Schritt d), wenn man in Schritt c) eine Mischung von Comonomeren eingesetzt hat und in Schritt d) ein Monomer zusetzt.

Wünscht man ein zweites Gemisch von Comonomeren zuzufügen, so fügt man mindestens ein Comonomer zu, das von dem Monomer oder den Comonomeren aus Schritt c) verschieden ist.

In einer Ausführungsform der vorliegenden Erfindung verwendet man im Schritt c) eine vinylaromatische Verbindung als Monomer und im Schritt d) mindestens ein Monomer oder Comonomer, welches Polymer bzw. Copolymer aus Schritt c) anquellen kann. Under Anquellen wird verstanden, dass unter Normalbedingungen mindestens 5 Gew.-% Monomer bzw. Comonomer in das Polymer bzw. Copolymer aus Schritt c) physikalisch eingelagert werden können.

Ganz besonders bevorzugt fügt man mindestens ein Monomer bzw. Comonomer der allgemeinen Formel II zu,

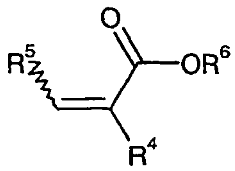

II

wobei die Variablen wie folgt definiert sind:

$R^4$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl;
- oder Wasserstoff;

ganz besonders bevorzugt sind Wasserstoff und Methyl;

$R^5$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl,

n-Propyl, iso-Propyl, n-Butyl, iso-Butyl, sec.-Butyl und tert.-Butyl;
-oder ganz besonders bevorzugt Wasserstoff.

$R^6$ wird gewählt aus unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.- Butyl und tert.-Butyl.

Wünscht man in Schritt d) eine Mischung von Comonomeren zuzufügen, so ist es ausreichend, wenn mindestens ein Comonomer von dem Monomer bzw. Comonomer aus Schritt c) verschieden ist. So ist es beispielsweise möglich, in Schritt c) Styrol einzusetzen und in Schritt d) eine Mischung aus Methylacrylat und Styrol.

In einer Ausführungsform der vorliegenden Erfindung liegt das Gewichtsverhältnis von zweitem Monomer bzw. zweiten Mischung an Comonomeren aus Schritt d) zu Pigment aus Schritt a) im Bereich von 0,7 : 1 bis 10:1, bevorzugt 1,5 : 1 bis 5 : 1, besonders bevorzugt 2 : 1 bis 4 : 1.

Insgesamt wählt man die Menge an Monomeren bzw. Comonomeren aus Schritt c) und d) des erfindungsgemäßen Verfahrens so, dass das Verhältnis Polymer bzw. Copolymer zu Pigment im Bereich von 1:1 bis 5:1, bevorzugt im Bereich von 2:1 bis 4:1 liegt.

In Schritt d) polymerisiert bzw. copolymerisiert man vorzugsweise unter den Bedingungen einer Emulsionspolymerisation. Man verwendet üblicherweise mindestens einen Initiator, wobei der oder die Initiatoren gewählt werden können aus den vorstehend genannten.

Man kann mindestens einen Emulgator einsetzen, der anionisch, kationisch oder nichtionisch sein kann.

Gebräuchliche nichtionische Emulgatoren sind z.B. ethoxylierte Mono-, Di- und Tri-Alkylphenole (Ethoxylierungsgrad: 3 bis 50, Alkylrest: $C_4$-$C_{12}$) sowie ethoxylierte Fettalkohole (Ethoxylierungsgrad: 3 bis 80; Alkylrest: $C_8$-$C_{36}$). Beispiele sind die Lutensol®-Marken der BASF Aktiengesellschaft und die Triton®-Marken der Union Carbide.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (Ethoxylierungsgrad: 4 bis 30, Alkylrest: $C_{12}$-$C_{18}$) und ethoxylierter Alkylphenole (Ethoxylierungsgrad: 3 bis 50, Alkylrest: $C_4$-$C_{12}$), von Alkylsulfonsäuren (Alkylrest: $C_{12}$-$C_{18}$) und von Alkylarylsulfonsäuren (Alkylrest: $C_9$-$C_{18}$) und von Sulfosuccinaten wie beispielsweise Sulfobersteinsäuremono- und diestern.

Geeignete kationische Emulgatoren sind in der Regel einen $C_6$-$C_{18}$-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(*N,N,N*-Trimethylammonium)ethylparaffinsäureester, *N*-Cetylpyridiniumchlorid, *N*-Laurylpyridiniumsulfat sowie *N*-Cetyl-*N*,*N*,*N*-trimethylammoniumbromid, *N*-Dodecyl-*N*,*N*,*N*-trimethylammoniumbromid, *N*,*N*-Distearyl-*N*,*N*-dimethylammoniumchlorid sowie das Gemini-Tensid *N*,*N*-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

in einer Ausführungsform der vorliegenden Erfindung wird die Menge des Emulgators so gewählt, dass das Massenverhältnis zwischen zweitem Monomer bzw. zweiter Mischung von Comonomeren einerseits und Emulgator andererseits größer als 1 ist, bevorzugt größer als 10 und besonders bevorzugt größer als 20.

Die Reihenfolge der Zugabe der Reaktionspartner aus Schritt d) ist an sich unkritisch.

In einer Ausführungsform der vorliegenden Erfindung gibt man den Initiator zu, wenn man durch beispielsweise Rühren eine milchig aussehende Emulsion erzeugt hat.

Als Polymerisationstemperatur kann man Temperaturen im Bereich von 20 bis 100°C, bevorzugt 50 bis 85°C wählen. Die gewählte Temperatur ist abhängig von der Zerfallscharakteristik des verwendeten Initiators.

Dir Druckbedingungen sind im Allgemeinen unkritisch, geeignet sind beispielsweise Drücke im Bereich von Normaldruck bis 10 bar.

Als Zeitdauer für die Polymerisation bzw. Copolymerisation in Schritt d) kann man eine Zeitdauer im Bereich von 30 Minuten bis 12 Stunden wählen, bevorzugt sind 2 bis 3 Stunden.

In einer Ausführungsform der vorliegenden Erfindung kann man in Schritt d) als Comonomer bis zu 10 Gew.-%, bevorzugt 2 bis 5 Gew.-%, bezogen auf Monomere bzw. Comonomere aus Schritt d), mindestens einer Verbindung der allgemeinen Formel V a bisVb

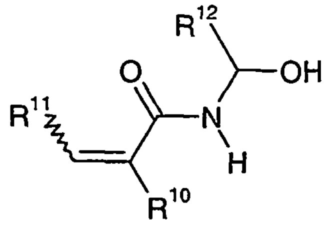

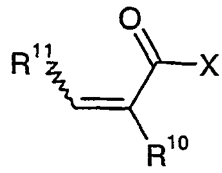

V a

V b

zusetzen, in denen die Variablen wie folgt definiert sind:

$R^{10}$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl;
- oder Wasserstoff;
- ganz besonders bevorzugt sind Wasserstoff und Methyl;

$R^{11}$ gewählt aus

- unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.-Butyl und tert.-Butyl;
- oder ganz besonders bevorzugt Wasserstoff.

$R^{12}$ wird gewählt aus unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.- Butyl und tert.-Butyl,

- oder ganz besonders bevorzugt Wasserstoff.

X gewählt aus

- Wasserstoff,

- Glycidyl

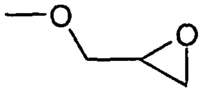

- Gruppen mit tertiären Aminogruppen, beispielsweise $NH(CH_2)_b$-$N(CH_3)_2$, wobei b eine ganze Zahl im Bereich von 2 bis 6 ist,

enolisierbaren Gruppen mit 1 bis 20 C-Atomen, beispielsweise Acetoacetyl

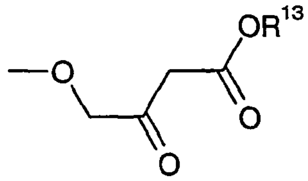

,

wobei

$R^{13}$ wird gewählt aus unverzweigtem oder verzweigtem $C_1$-$C_{10}$-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt $C_1$-$C_4$-Alkyl wie Methyl, Ethyl, n-Propyl, iso-Propyl, n-Butyl, iso-Butyl, sec.- Butyl und tert.-Butyl.

Ganz besonders bevorzugt ist in Formel V a bzw. V b $R^{10}$ gewählt aus Wasserstoff und Methyl und $R^{11}$ und $R^{12}$ sind jeweils Wasserstoff.

In einer weiteren Ausführungsform der vorliegenden Erfindung können in Schritt d) als Comonomere verwendet werden: jeweils 1 bis 5 Gew.-% (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure, verzweigt oder unverzweigt, Natriumsalz der Vinylsulfonsäure.

In einer Ausführungsform der vorliegenden Erfindung wählt man die zweite Mischung an Comonomeren so, dass sie im Bereich von 0,1 bis 3 Gew.-%, bezogen auf die Menge an Pigment in partikulärer Form, einer oder mehrerer ungesättigten Carbonsäuren der Formel VI

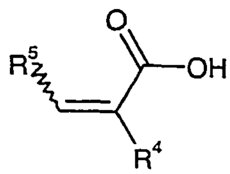

VI

enthält, wobei in Formel VI die Variablen wie oben stehend definiert sind.

In einer Ausführungsform der vorliegenden Erfindung wählt man das zweite Monomer bzw. die zweite Mischung von Comonomeren so, dass man in Schritt d) ein Polymer oder Copolymer mit einer Glastemperatur $T_g$ von etwa 0°C herstellt.

In einer anderen Ausführungsform der vorliegenden Erfindung wählt man das zweite Monomer bzw. die zweite Mischung von Comonomeren so, dass man in Schritt d) ein Polymer oder Copolymer mit einer Glastemperatur $T_g$ von 30°C oder höher herstellt.

Die beiden vorgenannten Ausführungsformen sind dann bevorzugt, wenn man erfindungsgemäß behandeltes Pigment in partikulärer Form zum Kolorieren von Textil einsetzen möchte.

In einer anderen Ausführungsform der vorliegenden Erfindung wählt man das zweite Monomer bzw. die zweite Mischung von Comonomeren so, dass man in Schritt d) ein Polymer oder Copolymer mit einer Glastemperatur $T_g$ von unter 20°C herstellt.

Die vorgenante Ausführungsform ist dann bevorzugt, wenn man erfindungsgemäß behandeltes Pigment in partikulärer Form zur Kolorierung von Leder einsetzen möchte.

Ein weiterer Gegenstand der vorliegenden Erfindung sind Pigmente in partikulärer Form, behandelt nach dem erfindungsgemäßen Verfahren. Sie fallen üblicherweise in Form wässriger Dispersionen an, die ebenfalls Gegenstand der vorliegenden Erfindung sind, und können durch dem Fachmann bekannte Maßnahmen leicht abgetrennt werden.

Erfindungsgemäße wässrige Dispersionen von erfindungsgemäß behandelten Pigmenten in partikulärer Form können einen Feststoffgehalt von 10 bis 50 Gew.-%, bevorzugt 30 bis 40 Gew.-% haben.

Erfindungsgemäß behandelte Pigmente sind umhüllt mit mindestens einer Schicht an Polymeren bzw. Copolymeren, die sich von Monomeren bzw. Comonomeren aus Schritt c) und Monomeren bzw. Comonomeren aus Schritt d) ableiten. Die Mehrheit der erfindungsgemäß behandelten Pigmente sind umhüllt mit zwei Schichten aus Polymeren bzw. Copolymeren, wobei die Schichten interpenetrierend sein können und nicht streng voneinander geschieden sein müssen. Die so charakterisierten Partikel werden im Folgenden auch als Pigment-haltige Polymerpartikel bezeichnet.

Die erfindungsgemäßen behandelten Pigmente in partikulärer Form können im Gemisch mit Polymer oder Copolymer vorliegen, welches sich von Monomeren bzw. Mischungen von Comonomeren aus Schritt d) ableitet.

In einer bevorzugten Ausführungsform der vorliegenden Erfindung liegen erfindungsgemäß behandelte Pigmente im Gemisch mit Polymer oder Copolymer vorliegen, welches sich von Monomeren bzw. Mischungen von Comonomeren aus Schritt d) ableitet. Das von Monomeren bzw. Mischungen von Comonomeren aus Schritt d) abgeleitete Polymer bzw. Copolymer fällt vorzugsweise in Form sphärischer Partikel an. Die so charakterisierten Partikel werden im Folgenden auch Pigment-freie Polymerpartikel genannt.

In einer bevorzugten Ausführungsform liegt das Gewichtsverhältnis Pigment-haltige Polymerpartikel zu Pigment-freie Polymerpartikel im Bereich von 10 : 0,1 bis 10 : 3, bevorzugt von 10 : 0,5 bis 10 : 2.

In einer bevorzugten Ausführungsform sind die mittleren Radien r(Pigment-freier Polymerpartikel) kleiner als die mittleren Radien r(Pigment-haltiger Polymer-Partikel), jeweils bezogen auf das Zahlenmittel: Das Radienverhältnis

$$\frac{r(\text{Pigment-haltige Polymerpartikel})}{r(\text{Pigment-freie Polymerpartikel})}$$

kann beispielsweise im Bereich von 1,2 bis 10 liegen, bevorzugt im Bereich von 2 bis 5.

Ein weiterer Gegenstand der vorliegenden Erfindung ist die Verwendung erfindungsgemäß behandelter Pigmente in partikulärer Form als oder zur Herstellung von Farbmittelzubereitungen. Ein weiterer Gegenstand der vorliegenden Erfindung ist ein Verfahren zur Herstellung von Farbmittelzubereitungen unter Verwendung erfindungsgemäß behandelter Pigmente in partikulärer Form. Ein weiterer Gegenstand der vorliegenden Erfindung sind Farbmittelzubereitungen, hergestellt unter Verwendung erfindungsgemäß behandelter Pigmente in partikulärer Form. Zur Herstellung von erfindungsgemäßen Farbmittelzubereitungen lassen sich die erfindungsgemäßen wässrigen Dispersionen als solche verwenden und auch die aus den erfindungsgemäßen Dispersionen abgetrennten erfindungsgemäß behandelten Pigmente.

Ein weiterer Gegenstand der vorliegenden Erfindung ist die Verwendung erfindungsgemäß behandelter Pigmente in partikulärer Form als oder zur Herstellung von Tinten für das Ink-Jet-Verfahren. Ein weiterer Gegenstand der vorliegenden Erfindung ist ein Verfahren zur Herstellung von Tinten für das Ink-Jet-Verfahren unter Verwendung der erfindungsgemäß behandelten Pigmente in partikulärer Form. Ein weiterer Gegenstand der vorliegenden Erfindung sind Tinten für das Ink-Jet-Verfahren, hergestellt unter Verwendung erfindungsgemäß behandelter Pigmente in partikulärer Form. Zur Herstellung von erfindungsgemäßen Tinten für das Ink-Jet-Verfahren lassen sich die erfindungsgemäßen wässrigen Dispersionen als solche verwenden und auch die aus den erfindungsgemäßen Dispersionen abgetrennten erfindungsgemäß behandelten Pigmente.

Besonders leicht lassen sich erfindungsgemäße Farbmittelzubereitungen und insbesondere erfindungsgemäße Tinten für das Ink-Jet-Verfahren dadurch herstellen, dass man erfindungsgemäß hergestellte Dispersionen mit beispielsweise Wasser verdünnt und gegebenenfalls mit Zuschlagstoffen vermischt.

In einer bevorzugten Ausführungsform der vorliegenden Erfindung enthält eine erfindungsgemäße Tinte für das Ink-Jet-Verfahren im Bereich von 1 bis 50 g/100 ml, bevorzugt 1,5 bis 15 g/100 ml erfindungsgemäß behandeltes Pigment in partikulärer Form.

Als Zuschlagstoffe können erfindungsgemäße Farbmittelzubereitungen und insbesondere erfindungsgemäße Tinten für das Ink-Jet-Verfahren organische Lösungsmittel enthalten. Niedermolekulares Polytetrahydrofuran ist ein bevorzugter Zuschlagstoff, es kann allein oder vorzugsweise im Gemisch mit einem oder mehreren schwer verdampfbaren, in Wasser löslichen oder mit Wasser mischbaren organischen Lösungsmitteln eingesetzt werden.

Das bevorzugt verwendete niedermolekulare Polytetrahydrofuran hat üblicherweise ein mittleres Molekulargewicht $M_w$ von 150 bis 500 g/mol, bevorzugt von 200 bis 300 g/mol und besonders bevorzugt von etwa 250 g/mol (entsprechend einer Molekulargewichtsverteilung).

Polytetrahydrofuran kann auf bekannte Weise über kationische Polymerisation von Tetrahydrofuran hergestellt werden. Dabei entstehen lineare Polytetramethylenglykole.

Wenn Polytetrahydrofuran im Gemisch mit weiteren organischen Lösungsmitteln als Zuschlagstoff verwendet wird, werden hierfür im Allgemeinen schwer verdampfbare (d.h. in der Regel bei Normaldruck einen Siedepunkt > 100°C aufweisende) und damit eine wasserrückhaltende Wirkung besitzende organische Lösungsmittel eingesetzt, die in Wasser löslich oder mit Wasser mischbar sind.

Als Lösungsmittel eignen sich mehrwertige Alkohole, bevorzugt unverzweigte und verzweigte mehrwertige Alkohole mit 2 bis 8, insbesondere 3 bis 6, Kohlenstoffatomen, wie Ethylenglykol, 1,2- und 1,3-Propylenglykol, Glycerin, Erythrit, Pentaerythrit, Pentite wie Arabit, Adonit und Xylit und Hexite wie Sorbit, Mannit und Dulcit.

Weitere geeignete Lösungsmittel sind Polyethylen- und Polypropylenglykole, worunter auch die niederen Polymere (Di-, Tri- und Tetramere) verstanden werden sollen, und deren Mono- (vor allem $C_1$-$C_6$-, insbesondere $C_1$-$C_4$-) alkylether. Bevorzugt sind Polyethylen- und Polypropylenglykole mit mittleren Molekulargewichten von 100 bis 1500 g/mol, insbesondere von 200 bis 800 g/mol, vor allem von 300 bis 500 g/mol. Als Beispiele seien Di-, Tri- und Tetraethylenglykol, Diethylenglykolmonomethyl-, -ethyl-, -propyl- und -butylether, Triethylenglykolmonomethyl-, -ethyl-, -propyl- und -butylether, Di-, Tri- und Tetra-1,2- und -1,3-propylenglykol und Di-, Tri- und Tetra-1,2- und -1,3-propylenglykolmonomethyl-, -ethyl-, -propyl- und -butylether genannt.

Weiterhin als Lösungsmittel geeignet sind Pyrrolidon und N-Alkylpyrrolidone, deren Alkylkette vorzugsweise 1 bis 4, vor allem 1 bis 2, Kohlenstoffatome enthält. Beispiele für geeignete Alkylpyrrolidone sind N-Methylpyrrolidon, N-Ethylpyrrolidon und N-(2-Hydroxyethyl)pyrrolidon.

Beispiele für besonders bevorzugte Lösungsmittel sind 1,2- und 1,3-Propylenglykol, Glycerin, Sorbit, Diethylenglykol, Polyethylenglykol ($M_w$ 300 bis 500 g/mol), Diethylenglykolmonobutylether, Triethylenglykolmonobutylether, Pyrrolidon, N-Methylpyrrolidon und N-(2-Hydroxyethyl)pyrrolidon.

Polytetrahydrofuran kann auch mit einem oder mehreren (z.B. zwei, drei oder vier) der oben aufgeführten Lösungsmitteln gemischt werden.

In einer Ausführungsform der vorliegenden Erfindung können die erfindungsgemäßen Farbmittelzubereitungen und insbesondere die erfindungsgemäßen Tinten für das Ink-Jet-Verfahren 0,1 bis 80 Gew.-%, bevorzugt 5 bis 60 Gew.-%, besonders bevorzugt 10 bis 50 Gew.-%, und ganz besonders bevorzugt 10 bis 30 Gew.-%, nicht-wässrige Lösungsmittel enthalten.

Die nicht-wässrigen Lösungsmittel als Zuschlagstoffe, insbesondere auch die genannten besonders bevorzugten Lösungsmittelkombinationen, können vorteilhaft durch Harnstoff (in der Regel 0,5 bis 3 Gew.-%, bezogen auf das Gewicht der Farbmittelzubereitung) ergänzt werden, der die wasserrückhaltende Wirkung des Lösungsmittelgemisches noch verstärkt.

Die erfindungsgemäßen Farbmittelzubereitungen und insbesondere die erfindungsgemäßen Tinten für das Ink-Jet-Verfahren können weitere Hilfsmittel, wie sie insbesondere für wässrige Ink-Jet-Tinten und in der Druck- und Lackindustrie üblich sind, enthalten. Genannt seien z.B. Konservierungsmittel wie beispielsweise 1,2-Benzisothiazolin-3-on (kommerziell erhältlich als Proxel-Marken der Fa. Avecia Lim.) und dessen Alkalimetallsalze, Glutardialdehyd und/ oder Tetramethylolacetylendiharnstoff, Protectole®, Antioxidantien, Entgaser/Entschäumer wie beispielsweise Acetylendiole und ethoxylierte Acetylendiole, die üblicherweise 20 bis 40 mol Ethylenoxid pro mol Acetylendiol enthalten und gleichzeitig auch dispergierend wirken können, Mittel zur Regulierung der Viskosität, Verlaufshilfsmittel, Netzmittel (z.B. benetzend wirkende Tenside auf der Basis von ethoxylierten oder propoxylierten Fett- oder Oxoalkoholen, Propylenoxid/ Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphosphaten, Alkylphenylphosphaten oder bevorzugt Polyethersiloxan-Copolymeren, insbesondere alkoxylierten 2-(3-Hydroxypropyl)heptamethyltrisiloxanen, die in der Regel einen Block aus 7 bis 20, vorzugsweise 7 bis 12, Ethylenoxideinheiten und einen Block aus 2 bis 20, vorzugsweise 2 bis 10 Propylenoxideinheiten aufweisen und in Mengen von 0,05 bis 1 Gew.-% in den Farbmittelzubereitungen enthalten sein können), Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer, Antistatikmittel, Basen wie beispielsweise Triethanolamin oder Säuren, speziell Carbonsäuren wie beispielsweise Milchsäure oder Zitronensäure zur Regulierung des pH-Wertes. Wenn diese Mittel Bestandteil erfindungsgemäßer Farbmittelzubereitungen und insbesondere erfindungsgemäßer Tinten für das Ink-Jet-Verfahren sind, beträgt ihre Gesamtmenge in der Regel 2 Gew. %, insbesondere 1 Gew.-%, bezogen auf das Gewicht der erfindungsgemäßen Farbmittelzubereitungen und insbesondere der erfindungsgemäßen Tinten für das Ink-Jet-Verfahren.

In einer Ausführungsform der vorliegenden Erfindung haben die erfindungsgemäßen Farbmittelzubereitungen und insbesondere die erfindungsgemäßen Tinten für das Ink-Jet-Verfahren eine dynamische Viskosität von 2 bis 80 mPa·s, bevorzugt 3 bis 20 mPa-s, gemessen bei 20°C.

Die Oberflächenspannung erfindungsgemäßer Farbmittelzubereitungen und insbesondere erfindungsgemäßer Tinten für das Ink-Jet-Verfahren beträgt in der Regel 24 bis 70 mN/m, insbesondere 25 bis 60 mN/m, gemessen bei 20°C.

Der pH-Wert erfindungsgemäßer Farbmittelzubereitungen und insbesondere erfindungsgemäßer Tinten für das Ink-Jet-Verfahren liegt im allgemeinen bei 5 bis 10, vorzugsweise bei 6 bis 9.

Ein weiterer Aspekt der vorliegenden Erfindung ist ein Verfahren zum Bedrucken von flächigen oder dreidimensionalen Substraten nach dem Ink-Jet-Verfahren unter Verwendung der erfindungsgemäßen Farbmittelzubereitungen. Dazu druckt man die erfindungsgemäßen Farbmittelzubereitungen oder die erfindungsgemäßen Ink-Jet-Tinten auf das Substrat auf und fixiert den erhaltenen Druck anschließend optional.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein

farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Tinten für das Bubble-Jet-Verfahren und für das Verfahren mittels eines piezoelektrischen Kristalls. Als Substratmaterialien sind geeignet:

- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien wie Glas, Porzellan und Keramik, die beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- Leder, sowohl Naturleder als auch Kunstleder, als Glatt-, Nappa- oder Velourleder,
- Lebensmittel und Kosmetika,
  und insbesondere
- textile Substrate wie Fasern, Garne, Zwirne, Maschenware, Webware, Non-wovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe.

Die erfindungsgemäßen Farbmittelzubereitungen und insbesondere die erfindungsgemäßen Tinten für das Ink-Jet-Verfahren zeigen insgesamt vorteilhafte Anwendungseigenschaften, vor allem gutes Anschreibverhalten und gutes Dauerschreibverhalten (Kogation) sowie, insbesondere bei Verwendung der besonders bevorzugten Lösungsmittelkombination, gutes Trocknungsverhalten, und ergeben Druckbilder hoher Qualität, d.h. hoher Brillanz und Farbtiefe sowie hoher Reib-, Licht-, Wasser- und Nassreibechtheit. Besonders geeignet sind sie zum Drucken auf gestrichenes und ungestrichenes Papier sowie Textil.

Eine weitere Ausführungsform der vorliegenden Erfindung sind Substrate, insbesondere textile Substrate, die nach einem der oben genannten erfindungsgemäßen Verfahren bedruckt wurden und sich durch besonders scharf gedruckte Bilder oder Zeichnungen sowie ausgezeichneten Griff auszeichnen.

Gemäß einer weiteren Ausführungsform der vorliegenden Erfindung kann man mindestens zwei, bevorzugt mindestens drei verschiedene erfindungsgemäße Tinten für das Ink-Jet-Verfahren zu Sets kombinieren, wobei verschiedene erfindungsgemäße Tinten jeweils unterschiedliche nach dem erfindungsgemäßen Verfahren behandelte Pigmente mit jeweils unterschiedlicher Farbe enthalten.

Ein weiterer Gegenstand der vorliegenden Erfindung ist die Verwendung der erfindungsgemäßen behandelten Pigmente in partikulärer Form zur Kolorierung von Textil. Ein weiterer Gegenstand der vorliegenden Erfindung ist ein Verfahren zur Kolorierung von Textil unter Verwendung der erfindungsgemäßen behandelten Pigmente in partikulärer Form, und ein weiterer Gegenstand der vorliegenden Erfindung sind kolorierte textile Substrate, erhältlich durch ein erfindungsgemäßes Verfahren zur Kolorierung von textilen Substraten.

Unter Textil bzw. textile Substraten sind im Rahmen der vorliegenden Erfindung Textilfasern, textile Halb- und Fertigfabrikate und daraus hergestellte Fertigwaren zu verstehen, die neben Textilien für die Bekleidungsindustrie beispielsweise auch Teppiche und andere Heimtextilien sowie technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Die Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polypropylen, Polyvinylchlorid, Polyestermikrofasern und Glasfasergewebe.

Erfindungsgemäß wird aus den oben beschriebenen Dispersionen eine Färbeflotte für die Pigmentfärbung beziehungsweise eine Druckpaste für den Pigmentdruck, speziell den textilen Pigmentdruck hergestellt. Gegenstand

der vorliegenden Erfindung ist somit weiterhin ein Verfahren zur Herstellung von Färbeflotten für die Pigmentfärbung und zur Herstellung von Druckpasten für den Pigmentdruck sowie die erfindungsgemäßen Färbeflotten und Druckpasten, im Folgenden auch erfindungsgemäße Herstellverfahren genannt.

Das erfindungsgemäße Herstellungsverfahren besteht darin, dass man mindestens eine erfindungsgemäße Dispersion mit für den Färbe- bzw. Druckprozess benötigten Hilfsmitteln mischt und den Farbmittelgehalt durch Verdünnen mit Wasser einstellt.

Das zur Ausübung des erfindungsgemäßen Herstellungsverfahrens eingesetzte Wasser muss nicht vollständig entsalzt sein. Die Regel ist, dass teilentsalztes Wasser bzw. sehr weiches Wasser eingesetzt wird. Steht nicht hinreichend weiches Wasser zur Verfügung, werden in der Regel Komplexbildner (Wasserenthärter) eingesetzt um die Wasserhärte zu vermindern. Generell sind Verbindungen als Wasserenthärter im Pigmentfärbeprozess geeignet, die $Ca^{2+}$ und $Mg^{2+}$ Ionen maskieren. Besonders gut geeignete Wasserenthärter sind z.B. Nitrilotriessigsäure, Ethylendiamintetraessigsäure, Diethylentriaminpentaessigsäure, Hydroxyethylethylendiamintriessigsäure oder Methylglycindiessigsäure. Die Menge des zugegebenen Wassers zur Herstellung der Färbeflotte richtet sich nach der auf dem Textil zu erzielenden Farbtiefe auf der einen Seite und der mittels Foulard auf das Textil aufgebrachten Menge an Färbeflotte auf der anderen Seite.

Weiterhin können erfindungsgemäße Färbeflotten Zusätze enthalten. Bevorzugte Zusätze sind organische Lösemittel in Konzentrationen von 0 bis 10 Gew.%, bevorzugt 0,1 bis 5 Gew.-%. Als Lösemittel kommen beispielsweise Polyethylenglykole und einfach verethertes Alkylenglykol oder einfach veretherte Polyethylenglykole wie beispielsweise Diethylenglykolmono-n-butylether in Betracht.

Weiterhin können erfindungsgemäße Färbeflotten als Zusatz Netzmittel enthalten, bevorzugt schaumarme Netzmittel, da bei in der Regel auftretenden hohen Turbulenzen im Färbeprozess Schaumbildung die Qualität der Färbung durch Bildung von Unegalitäten beeinträchtigt werden kann. Als Netzmittel werden beispielsweise eingesetzt: Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Trockene textile Gewebe oder Gewirke, wie sie in der kontinuierlichen Pigmentfärbung eingesetzt werden, enthalten eine große Menge von Luft. Hier ist im Färbeprozess der Einsatz von Entlüftern notwendig. Diese basieren beispielsweise auf Polyethersiloxan-Copolymeren oder oder auf Phosphorsäureestern. Sie können in Mengen von 0,01 bis 2 g/l in den erfindungsgemäßen Färbeflotten enthalten sein.

Weiterhin kann man erfindungsgemäßen Färbeflotten als Zusatz einen oder mehrere Griffverbesserer zusetzen. Hierbei handelt es sich in der Regel um Polysiloxane oder um Wachse auf Basis von Polyethylen oder Polyethylenglykol. Polysiloxane haben hierbei den Vorteil der Permanenz, während manche Wachse langsam während des Gebrauchs ausgewaschen werden können. In einer Ausführungsform der vorliegenden Erfindung kann man jedoch auf den Zusatz von Griffverbesserern verzichten.

In einer Ausführungsform der vorliegenden Erfindung weisen erfindungsgemäße Färbeflotten einen schwach sauren pH-Wert auf, vorzugsweise im Bereich von 4 bis 6,5.

In einer Ausführungsform der vorliegenden Erfindung liegt die dynamische Viskosität der erfindungsgemäßen Färbeflotten im Bereich von unter 100 mPa·s, gemessen bei 20°C. Die Oberflächenspannungen der erfindungsgemäßen Färbeflotten sind so einzustellen, dass ein Benetzen der Ware möglich ist. Gängig sind Oberflächenspannungen von kleiner 50 mN/m, gemessen bei 20°C.

Ein weiterer Aspekt der vorliegenden Erfindung ist ein Verfahren zur Herstellung der erfindungsgemäßen Färbeflotten. Das erfindungsgemäße Herstellungsverfahren umfasst üblicherweise ein Vermischen mindestens eines erfindungsgemäß behandelten Pigments in partikulärer Form mit einem oder mehreren oben aufgeführten Zusätzen wie Lösemitteln, Entschäumern, Griffverbesserern, Emulgatoren und/oder Bioziden und Auffüllen mit Wasser. Das Verfahren umfasst üblicherweise ein Verrühren der Komponenten in einem Mischbehälter, wobei Größe und Form des Mischbehälters unkritisch sind. Bevorzugt schließt sich an das Verrühren eine Klärfiltration an.

Ein weiterer Aspekt der vorliegenden Erfindung ist ein Verfahren zum Färben von textilen Substraten unter Verwendung der oben beschriebenen erfindungsgemäßen Färbeflotten. Das Verfahren kann in den gängigen Maschinen durchgeführt werden. Bevorzugt sind Foulards, die als wesentliches Element zwei aufeinandergepresste Rollen enthalten, durch die das Textil geführt wird. Oberhalb der Rollen ist die Flüssigkeit eingefüllt und benetzt das Textil. Durch den Druck wird das Textil abgequetscht und ein konstanter Auftrag gewährleistet.

In einer weiteren Ausführungsform wird das Textil über eine Umlenkrolle durch einen Trog mit der Färbeflotte geführt. Anschließend wird über ein Walzenpaar, welches oberhalb der Flotte angebracht ist, überschüssige Flotte abgepresst und so ein konstanter Auftrag gewährleistet.

An den eigentlichen Färbeschritt schließt sich üblicherweise eine thermische Trocknung und Fixierung an, bevorzugt trocknet man bei Temperaturen von 70 bis 120°C über einen Zeitraum von 30 Sekunden bis 3 Minuten und fixiert anschließend bei Temperaturen von 150°C bis 200°C über einen Zeitraum von 30 Sekunden bis 5 Minuten. Bevorzugt ist ein Verfahren zur Pigmentfärbung nach dem Klotzprozess. Die bedruckten und gefärbten Substrate zeichnen sich durch besondere Brillanz der Farben bei gleichzeitig hervorragendem Griff der bedruckten bzw. gefärbten Substrate aus. Ein weiterer Aspekt der vorliegenden Erfindung sind daher Substrate, gefärbt nach dem oben beschriebenen Verfahren unter Verwendung der erfindungsgemäßen Färbeflotten.

Ein weiterer Aspekt der vorliegenden Erfindung ist die Verwendung erfindungsgemäß behandelter Pigmente in partikulärer Form für den Textildruck. Erfindungsgemäß arbeitet man zu diesem Zweck mindestens ein erfindungsgemäß behandeltes Pigment in partikulärer Form in eine Druckpaste ein. Vorteilhaft stellt man die erfindungsgemäße Druckpaste für den Textildruck mindestens einem erfindungsgemäß behandelten Pigment in partikulärer Form durch Mischen mit im Druckprozess gängigen Hilfsmitteln und anschließende Einstellung des Farbmittelgehaltes durch Verdünnen mit Wasser her.

Gängige Hilfsmittel sind aus Ullmann, Handbuch der technischen Chemie und Verfahrenstechnik bekannt, vergleiche beispielsweise Ullmann's Enyclopedia of Industrial Chemistry, 5. Auflage, Stichwort: Textile Auxiliaries, Bd. A26, S. 286 ff. und 296 ff., Verlag Chemie, Weinheim, Deerfield/Florida, Basel; 1996. Als gängige Hilfsmittel seien Verdicker, Fixierer, Griffverbesserer und Emulgatoren beispielhaft genannt:

Als Verdicker können natürliche oder synthetische Verdicker eingesetzt werden. Bevorzugt ist der Einsatz von synthetischen Verdickern, beispielsweise von im Allgemeinen flüssigen Lösungen von synthetischen Polymeren in beispielsweise Weißöl oder als wässrige Lösungen. Die Polymere enthalten Säuregruppen, die vollständig oder zu einem gewissen Prozentsatz mit Ammoniak neutralisiert werden. Beim Fixierprozess wird Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen.

Die erfindungsgemäße fertige Paste kann 30 bis 70 Gew.-% Weißöl enthalten. Wässrige Verdicker enthalten üblicherweise bis zu 25 Gew.-% Polymer. Wünscht man wässrige Formulierungen eines Verdickers einzusetzen, so setzt man im Allgemeinen wässriges Ammoniak zu. Auch der Einsatz granulärer, fester Formulierungen eines Verdickers sind denkbar, um Emissions-frei Pigmentdrucke herstellen zu können.

Erfindungsgemäße Druckpasten können weiterhin Griffverbesserer enthalten, die üblicherweise aus Silikonen, insbesondere Polydimethylsiloxanen, und Fettsäureestern ausgewählt werden. Beispiele für kommerziell erhältliche Griffverbesserer, die den erfindungsgemäßen Druckpasten zugesetzt werden können, sind Acramin® Weichmacher SI (Bayer AG), Luprimol SIG® und Luprimol CW® (BASF Aktiengesellschaft).

Erfindungsgemäßen Druckpasten können als weitere Zusätze ein oder mehrere Emulgatoren zugesetzt werden, insbesondere dann, wenn die Pasten Weißöl-haltige Verdicker enthalten und als Öl-in-Wasser-Emulsion anfallen. Beispiele für geeignete Emulgatoren sind aryl- oder alkylsubstituierte Polyglykolether. Kommerziell erhältliche Beispiele für geeignete Emulgatoren sind Emulgator W® (Bayer), Luprintol PE New® und Luprintol MP® (BASF Aktiengesellschaft), und Solegal W® (Hoechst AG).

Als weitere Zusätze kann man Bronsted-Säuren zusetzen, deren Einsatz insbesondere bei Pasten auf nichtwässriger Basis bevorzugt ist. Bevorzugt sind Ammoniumsalze anorganischer Säuren, beispielsweise Diammoniumhydrogenphosphat.

Pigmentdruck unter Verwendung mindestens eines erfindungsgemäß behandelten Pigments in partikulärer Form kann nach verschiedenen Verfahren durchgeführt werden, die an sich bekannt sind. In der Regel verwendet man eine Schablone, durch die man die Druckpaste mit einer Rakel presst. Dieses Verfahren gehört zu den Siebdruckverfahren. Das erfindungsgemäße Pigmentdruckverfahren unter Verwendung der erfindungsgemäßen Druckpasten liefert bedruckte Substrate mit besonders hoher Brillanz und Farbtiefe der Drucke bei gleichzeitig ausgezeichnetem Griff der bedruckten Substrate. Gegenstand der vorliegenden Erfindung sind daher Substrate, bedruckt nach dem erfindungsgemäßen Verfahren unter Verwendung der erfindungsgemäßen Druckpasten.

Eine weitere Ausführungsform der vorliegenden Erfindung sind Substrate, insbesondere textile Substrate, die nach einem der oben genannten erfindungsgemäßen Verfahren koloriert wurden und sich durch besonders scharf gedruckte Bilder oder Zeichnungen sowie ausgezeichneten Griff auszeichnen.

Ein weiterer Gegenstand der vorliegenden Erfindung ist die Verwendung der erfindungsgemäßen behandelten Pigmente in partikulärer Form zur Kolorierung von Leder. Ein weiterer Gegenstand der vorliegenden Erfindung ist ein Verfahren zur Kolorierung von Leder unter Verwendung der erfindungsgemäßen behandelten Pigmente in partikulärer Form, und ein weiterer Gegenstand der vorliegenden Erfindung ist kulärer Form, und ein weiterer Gegenstand der vorliegenden Erfindung ist koloriertes Leder, erhältlich durch ein erfindungsgemäßes Verfahren zur Kolorierung von Leder.

Unter Leder ist im Rahmen der vorliegenden Erfindung vorgegerbtes, gegerbtes und gegebenenfalls nachgegerbtes Leder oder entsprechend bearbeitetes synthetisches Austauschmaterial zu verstehen, was während mindestens eines Gerbschritts bereits mit mindestens einem Farbstoff behandelt worden sein kann. Leder im Rahmen der vorliegenden Erfindung kann bereits hydrophobiert bzw. gefettet sein.

Erfindungsgemäß behandeltes Pigment in partikulärer Form verträgt sich mit den handelsüblichen Hilfsmitteln für die Zurichtung von Leder, die sich zur Regulierung von Griff, Farbe, Verlauf und Viskosität einsetzen lassen. Dies

sind im allgemeinen Lösungen (z. B. Verlaufshilfsmittel, Produkte auf Basis Glykolether, Ether, wie z. B. Butylglykol, Methoxypropanol, Tributoxyethylphosphat) oder Emulsionen/Dispersionen mit Kasein, Wachsen, Silikonen in den üblichen Anwendungsmengen bzw. Anwendungskonzentrationen (siehe F. Stather, Gerbereichemie u. Gerbereitechnologie, Akademie Verlag Berlin, 1967, S.507-632).

In einer speziellen Ausführungsform der vorliegenden Erfindung handelt es sich bei dem erfindungsgemäßen Verfahren zur Kolorierung um ein Verfahren zur Topfärbung von Leder im Fass zum Zweck der Abdeckung von Fehlern, die in einer vorgehenden Färbung von Leder im Fass entstanden sind. Nach der normalen Durchfärbung mit gerbereiüblichen Farbstoffen in der Fassfärbung wird zur Abdeckung von Fehlern mit erfindungsgemäß behandeltem Pigment in partikulärer Form gearbeitet, das eine deutlich höhere Lichtechtheit als Farbstoffe aufweist, bestimmt beispielsweise nach DIN EN ISO 5 B02.

In einer anderen speziellen Ausführungsform der vorliegenden Erfindung handelt es sich bei dem erfindungsgemäßen Verfahren zur Kolorierung von Leder um ein Verfahren zur anilinartigen Spritzfärbung von Leder, im Folgenden auch erfindungsgemäße Spritzfärbung genannt. Bei erfindungemäßer Spritzfärbung bleibt die natürliche Oberfläche und Struktur von Leder vorzugsweise unverändert.

Zur Durchführung einer erfindungsgemäßen Spritzfärbung mischt man erfindungsgemäß behandeltes Pigment in partikulärer Form mit Wasser und Tensid und spritzt die so erhaltene Mischung mit Hilfe von an sich bekannten Vorrichtungen auf ungefärbtes Leder.

Als Tenside sind allgemein bekannte ionische und nicht-ionische Tenside geeignet, bevorzugt nicht-ionische Tenside. Besonders bevorzugte nicht-ionische Tenside sind beispielsweise alkoxylierte gesättigte oder ungesättigte Fettalkohole oder alkoxylierte gesättigte oder ungesättigte Fettamine, d.h. Alkohole bzw. Amine mit mehr als 14 C-Atomen.

In einer Ausführungsform der vorliegenden Erfindung bereitet man Mischungen aus

- 1 bis 30, bevorzugt 5 bis 25 Gew.-% erfindungsgemäß behandeltem Pigment in partikulärer Form,
- 0,1 bis 10, bevorzugt 1 bis 5 Gew.-% Tensid.

Der Rest ist Wasser, wobei Angaben in Gew.-% jeweils auf die Mischung bezogen sind. Eine oder mehrere bereitete Mischungen spritzt man auf ungefärbtes Leder.

In einer anderen Ausführungsform der vorliegenden Erfindung handelt es sich bei dem erfindungsgemäßen Verfahren zur Kolorierung von Leder um ein Verfahren zur Zurichtung von Leder. Ziel einer Zurichtung von Leder, auch Beschichtung von Leder genannt, ist es, Leder das gewünschte Aussehen, spezielle haptische Eigenschaften sowie Gebrauchsechtheiten zu geben wie z.B. Knickelastizität, Aminbeständigkeit, Nass- und Trockenreibechtheit und Wasserechtheit.

In einer Ausführungsform geht das erfindungsgemäße Verfahren zur Kolorierung aus von vorgegerbtem, gegerbtem und gegebenenfalls nachgegerbtem Leder, welches bereits nach an sich bekannter Weise hydrophobiert und gefärbt sein kann.

Zunächst bringt man mindestens eine Grundierdispersion oder - wenn ein zweischichtiger Grundierungsaufbau gewünscht wird, erst eine sogenannte Haftgrundierung, danach die Grundierdispersion - die ein oder mehrere erfindungsgemäß behandelte Pigmente enthalten kann bzw. können, in einer Menge auf das zu kolorierende Leder, dass pro $m^2$ Lederoberfläche etwa 10 bis 100 g Feststoff aufgebracht werden, bevorzugt 20 bis 50 $g/m^2$. Das Aufbringen kann durch an sich bekannte Methoden erfolgen, beispielsweise Rollcoaten (Walzenauftrag), Streichen, Spritzen, sogenanntes "airless Spritzen", Drucken, Kaschieren, Plüschen, Bürsten, Gießen oder Aufsprühen. Man kann das so behandelte Leder anschließend trocknen, beispielsweise bei einer Temperatur im Bereich von 30 bis 80°C, bevorzugt 60 bis 80°C. Das Aufbringen von mindestens einer Grundierdispersion kann in einem oder in mehreren Schritten erfolgen, die gleich oder verschieden durchgeführt werden können und jeweils durch eine Zwischentrocknung bei den oben genannten Temperaturen unterbrochen sein können.

Erfindungsgemäß eingesetzte Grundierdispersionen, die im Folgenden auch als erfindungsgemäße Grundierdispersionen bezeichnet werden, sind üblicherweise wässrig. Sie können weitere, nicht-wässrige Lösemittel enthalten wie beispielsweise Ethylenglykol, N-Methylpyrrolidon, 3-Methoxypropanol und Propylencarbonat. In einer bevorzugten Ausführungsform enthalten erfindungsgemäße Grundierdispersionen folgende Bestandteile:

α1) mindestens ein erfindungsgemäß behandeltes Pigment in partikulärer Form, beispielsweise 1 bis 10 Gew.-%, bevorzugt 1,5 bis 5 Gew.-%

β1) mindestens ein Wachs, wie beispielsweise oxidiertes Polyethylenwachs, Carnaübawachs oder Montanwachs, beispielsweise bevorzugt 1 bis 15 Gew.-%,

γ1) mindestens ein Biozid, beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3 ("MIT") und 5-Chlor-2-methyl-2H-isothiazol-3-on ("CIT’’). Im Allgemeinen sind 10 bis 150 ppm Biozid ausreichend.

δ1) optional mindestens ein Bindemittel, beispielsweise Acrylat-Methacrylat-Copolymerbinder. Dabei kann es vorteilhaft sein, wenn die Comonomerzusammensetzung des zusätzlichen Binders annähernd mit dem Copolymer gemäß d) übereinstimmt. Für Automobilieder kann eine Abmischung mit einem Urethanbinder von weiterem Vorteil sein.

Grundierdispersionen können weiterhin mindestens ein Füll- und Antiklebemittel enthalten. Geeignet sind beispielsweise wässrige Formulierungen, enthaltend Fettsäureester, Eiweiß oder Proteine und anorganischem Füllstoff, der gewählt werden kann aus Silikaten und Tonmineralen.

Erfindungsgemäße Grundierdispersionen können einen Feststoffgehalt von 10 bis 80 Gew.-% haben, bevorzugt sind 20 bis 50 Gew.-%.

Anschließend kann man eine Deckschicht nach an sich bekannten Methoden aufbringen. Die Deckschicht kann aus den üblichen Bestandteilen bestehen.

In einer Ausführungsform der vorliegenden Erfindung enthält die Deckschicht, jeweils bezogen auf die Gesamtmasse an Deckschicht:

α2) mindestens ein Pigment in partikulärer Form, beispielsweise im Bereich von 0,05 bis 5 Gew.-%,

δ2) optional mindestens ein weiteres Bindemittel, bevorzugt 20 bis 70 Gew.-%,

ε2) optional mindestens ein Verdickungsmittel.

In einer bevorzugten Ausführungsform der vorliegenden Erfindung enthält die Deckschicht mindestens ein Bindemittel, dessen Härte höher ist als die Härte der Grundierschicht.

Anschließend kann man eine Appretur, auch Appreturdispersion genannt, aufbringen, wobei man als Appretur etwa 5 bis 30 g/$m^2$ Lederoberfläche aufbringt. Die Appretur oder Topcoat dient zum Schutz des Leders und soll neben hoher Flexibilität auch eine gute Kratzfestigkeit, Öl- und Wasserbeständigkeit gewährleisten. Je nach gewünschtem Artikel soll sie Glanz oder Mattigkeit aufweisen, d.h. man kann auch Mattierungsmittel zugeben. Appreturen können beispielsweise enthalten: Formulierungen aus mindestens einem Bindemittel auf Acrylat- oder Polyurethanbasis, ein Vernetzungsmittel, Eiweiß, Nitrocelluloseemulsion, Füllstoffe auf Basis organischer oder anorganischer Mattierungsmittel, Silikonwachs, Fettsäureester, Fettsäuren.

Erfindungsgemäße Appreturdispersionen können neben erfindungsgemäß behandeltem Pigment in partikulärer Form weitere, an sich bekannte Binder enthalten, beispielsweise Polyurethandispersion, hergestellt nach EP-A2 0 392 352.

Deckschichten und Appreturdispersionen können ein oder mehrere Verdickungsmittel enthalten. Beispielhaft seien vernetzbare Copolymere auf Basis von Acrylsäure und Acrylamid sowie Verdickungsmittel auf Basis von Polyurethan oder Polyvinylpyrrolidon oder Acrylat(co)polymerisaten genannt.

Nach Aufbringen der Appretur kann man unter üblichen Bedingungen trocknen, beispielsweise bei Temperaturen im Bereich von 60 bis 80°C, und anschließend nachbügeln, beispielsweise bei Temperaturen im Bereich von 90 bis 160°C. Man kann auch hydraulisch nachbügeln, beispielsweise bei vermindertem Druck und Temperaturen im Bereich von 70 bis 100°C. Es kommen konventionelle Vorrichtungen zum Bügeln in Frage oder Durchlaufbügelmaschinen.

Bei dem erfindungsgemäßen Verfahren zur Zurichtung von Leder verwendet man in mindestens einem Schritt - Grundierung, Aufbringen der Deckschicht und Appreturmindestens eine erfindungsgemäße Formulierung.

Anschließend kann man eine Appretur in Form einer Dispersion, im Rahmen der vorliegenden Erfindung auch Appreturdispersion genannt, aufbringen, wobei man etwa 10 bis 30 g/$m^2$ Lederoberfläche Appreturdispersion aufbringt.

In einer Ausführungsform der vorliegenden Erfindung enthält die Appreturdispersion

α3) mindestens ein erfindungsgemäß behandeltes Pigment in partikulärer Form, beispielsweise im Bereich von 0,05 bis 5 Gew.-%,

β3) optional mindestens ein Wachs, wie beispielsweise oxidiertes Polyethylenwachs oder Montanwachs, geeignete Mengen sind beispielsweise 20 bis 70 Gew.-%,

γ3) optional mindestens ein Biozid, beispielsweise 1,2-Benzisothiazolin-3-on ("BIT") (kommerziell erhältlich als Proxel®-Marken der Fa. Avecia Lim.) und dessen Alkalimetallsalze; andere geeignete Biozide sind 2-Methyl-2H-isothiazol-3 ("MIT") und 5-Chlor-2-methyl-2H-isothiazol-3-on ("CIT"). Im Allgemeinen sind 10 bis 150 ppm Biozid ausreichend.

δ3) optional mindestens ein weiteres Bindemittel, beispielsweise Urethangruppenhaltige Bindemittel.

Natürlich können Appreturdispersionen weitere übliche Bestandteile enthalten, beispielsweise Schellack oder ein oder mehrere weitere Pigmente oder Nitrocellulose.

Appreturdispersionen können ein oder mehrere Verdickungsmittel enthalten. Beispielhaft seien vernetzbare

Copolymere auf Basis von Acrylsäure und Acrylamid genannt. Bevorzugte Beispiele sind Copolymere mit 85 bis 95 Gew.-% Acrylsäure, 4 bis 14 Gew.-% Acrylamid und etwa 1 Gew.-% des (Meth)acrylamidderivats der Formel VII

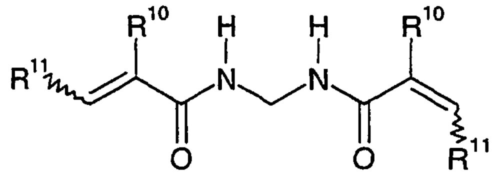

VII

mit Molekulargewichten $M_w$ im Bereich von 100.000 bis 200.000 g/mol, in denen die Reste $R^{10}$ und $R^{11}$ gleich oder verschieden sein können und wie oben stehend definiert sind.

Nach Aufbringen der Appretur kann man unter üblichen Bedingungen trocknen, beispielsweise bei Temperaturen im Bereich von 60 bis 80°C, und anschließend nachbügeln, beispielsweise bei Temperaturen im Bereich von 90 bis 160°C. Man kann auch hydraulisch nachbügeln, beispielsweise bei vermindertem Druck und Temperaturen im Bereich von 70 bis 100°C. Es kommen konventionelle Vorrichtungen zum Bügeln in Frage oder Durchlaufbügelmaschinen.

Im Rahmen der vorliegenden Erfindung enthält mindestens eine Schicht, ausgewählt aus Grundierschicht, Deckschicht und Appretur, mindestens ein erfindungsgemäß behandeltes Pigment in partikulärer Form. Vorzugsweise enthalten jedoch mindestens zwei, besonders bevorzugt mindestens drei Schichten mindestens ein erfindungsgemäß behandeltes Pigment in partikulärer Form.

Man beobachtet, dass erfindungsgemäß behandelte Pigmente in partikulärer Form auf erfindungsgemäß koloriertem Leder in messbarem Umfang weder agglomerieren noch eine Tendenz zur Migration aufweisen.

Ein weiterer Aspekt der vorliegenden Erfindung sind kolorierte Leder, hergestellt unter Verwendung mindestens eines erfindungsgemäß behandelten Pigments in partikulärer Form. Erfindungsgemäße Leder zeichnen sich durch angenehme haptische Eigenschaften bei besonders gleichmäßiger Kolorierung und geringer Migrationsneigung des Pigments in partikulärer Form aus und sind daher besonders geeignet zur Herstellung von Schuhen. Auch eignen sich erfindungsgemäße Leder besonders als Möbelleder und im Autoinnenbereich.

Die Erfindung wird durch Arbeitsbeispiele erläutert.

Allgemeine Vorbemerkungen

Bei n-$C_{18}H_{37}$-$(OCH_2CH_2)_{25}$-OH handelt es sich um mit Ethylenoxid ethoxylierten Octadecanol, hergestellt nach der folgenden Vorschrift:

242 g n-Octadecanol und 0,1 mol KOH-Schuppen wurden bei einer Temperatur von 100°C und einem Druck von 1 mbar in einer Zeit von 2 Stunden im Autoklaven entwässert, mit Stickstoff anschließend entspannt und 3 mal mit Stickstoff gespült und anschließend auf 130°C im Autoklaven erhitzt. Nach Erreichen der Temperatur wurden innerhalb von 3 h 20 min 1100 g Ethylenoxid kontinuierlich zudosiert bei einem Druck von bis zu 6,1 bar. Nach vollständiger Zugabe ließ man abreagieren, bis Druckkonstanz erreicht war. Anschließend wurde auf 100°C abgekühlt und im Autoklaven bei 1 mbar 60 min entgast und das Reaktionsprodukt bei 70°C ausgefüllt. Die Ausbeute betrug 1337 g.

Die Glastemperatur wurde mit Hilfe eines DSC-Geräts DSC822 (Serie TA8200) der Firma Mettler-Toledo mit einem Autosampler TSO 801 RO bestimmt. Das DSC-Gerät war mit einem Temperaturfühler FSR5 ausgerüstet. Es wurde nach DIN 53765 gearbeitet.

Beispiel I

Herstellung von erfindungsgemäß behandelten Pigmenten in partikulärer Form

I a) Vermischung eines Pigments in partikulärer Form mit einem nicht-ionischen oberflächenaktiven Stoff

I.1a) Blaues Pigment

In einer Kugelmühle Drais Superflow DCP SF 12 wurden miteinander vermahlen:

1800 g Pigment Blau 15:3

(fortgesetzt)

| | |
|---|---|
| 450 g | $n\text{-}C_{18}H_{37}O(CH_2CH_2O)_{25}H$ |
| 24 g | Glutardialdehyd |
| 30 g | Tetramethylolacetylendiharnstoff |
| 3696 g | destilliertes Wasser |

Das Vermahlen wurde fortgesetzt, bis die Pigmentpartikel einen mittleren Durchmesser von 100 nm aufwiesen.
Man erhielt Mischung I.1a) von Pigment in partikulärer Form und nicht-ionischem oberflächenaktivem Stoff.

I. 2a) Vermischung eines Pigments mit einem nicht-ionischen oberflächenaktiven Stoff

In einer Rührwerkskugelmühle des Typs Drais Superflow DCP SF 12 wurden miteinander vermahlen:

| | |
|---|---|
| 1800 g | Pigment Green 7 |
| 450 g | $n\text{-}C_{18}H_{37}O(CH_2CH_2O)_{25}H$ |
| 24 g | Glutardialdehyd |
| 30 g | Tetramethylolacetylendiharnstoff |
| 3696 g | destilliertes Wasser |

Man erhielt Mischung 1. 2a) von Pigment in partikulärer Form und nichtionischem oberflächenaktiven Stoff.

I b) Dispergieren in Wasser

I. 1b) Dispergieren der Mischung aus I. 1 a) in Wasser

In einem 1-Liter Kessel mit Rührer, Stickstoff-Anschluss und drei Dosiervorrichtungen wurden 267 g der Mischung aus I. 1a) mit 270 g destilliertem Wasser unter Rühren dispergiert. Man gab 7,1 g 28 Gew.-% Natriumlaurylsulfat als wässrige Lösung und 60 g Styrol zu, und stellte mit Ameisensäure einen pH-Wert von 4,0 ein.
Man erhielt Dispersion I. 1b) von Pigment in partikulärer Form in wässrigem Medium.

I. 2b) Dispersion der Mischung aus I. 2a) in Wasser. Versuch I.1 b) wurde wiederholt, jedoch mit Mischung I.2 a) statt I.1 a). Man erhielt Dispersion I.2 b) von Pigment in partikulärer Form in wässrigem Medium.

I. 1c) Polymerisation

Durch die Dispersion aus Schritt I. 1b) wurde über einen Zeitraum von 1 Stunde Stickstoff geleitet. Anschließend wurde die Dispersion auf 85°C erwärmt. Danach wurde 0,29 tert.-Butylhydroperoxid (70 Gew.-% in Wasser) und 0,2 g $HO\text{-}CH_2\text{-}SO_2Na$ zugegeben.
Man beobachtete die Bildung eines wasserunlöslichen Polymers auf dem Pigment in partikulärer Form.

I. 1d) Hinzufügen einer Emulsion von Comonomeren und weitere Copolymerisation

5 Minuten nach der Zugabe von tert.-Butylhydroperoxid und $HO\text{-}CH_2\text{-}SO_2Na$ gemäß Schritt I. 1c) wurde über einen Zeitraum von 90 Minuten eine Mischung zugegeben, die wie folgt zusammengesetzt war:

100 g vollentsalztes Wasser
13,4 g 28 Gew.-% wässrige Lösung von

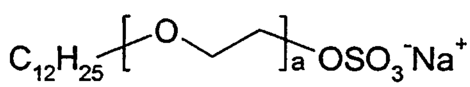

mit a = 3
6,6 g 56,5 Gew.-% wässsrige Lösung von Natrium-(di-2-ethylhexylsuccinat)-sulfonat (Natriumsalz von Sulfobernsteinsäuredi-2-ethylhexylester)
150 g n-Butylacrylat
90 g Styrol
2,5 g Acrylsäure
7,5 g Verbindung V a.1 als 15 Gew.-% Lösung in Wasser

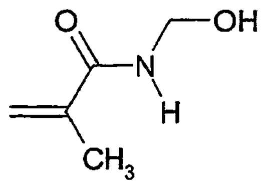

V a.1

Gleichzeitig wurde mit der Zugabe einer Lösung von 1,25 g $Na_2S_2O_8$ in 60 g Wasser begonnen, und die Zugabe wurde über einen Zeitraum von 105 Minuten durchgeführt. Während der Zugabe wurde die Temperatur bei 85°C gehalten.

Nach der Beendigung der Zugabe wurde noch 30 Minuten bei 85°C gerührt und anschließend zur Desodorierung simultan eine Lösung von 1,1 g tert.-Butylhydroperoxid (70 Gew.-% in chemischen Wasser) in 15 g destilliertem Wasser und eine Lösung von 0,7 g $HO-CH_2-O-SO_2Na$ in 15 g destilliertem Wasser über einen Zeitraum von 90 Minuten zudosiert.

Danach wurde auf Zimmertemperatur abgekühlt und mit 25 Gew.-% wässrigem Ammoniak ein pH-Wert von 7 eingestellt.

Anschließend wurde die so erhältliche Dispersion über ein 120 µm-Netz und danach über ein 15 µm-Netz filtriert.

Man erhielt eine wässrige Dispersion, enthaltend erfindungsgemäß behandelte Pigmentpartikel. Der Feststoffgehalt betrug 37,8 Gew.-%, die dynamische Viskosität betrug 25 mPa·s, gemessen bei 20°C. Die Teilchendurchmesserverteilung des wie oben beschrieben erhältlichen erfindungsgemäß behandelten Pigments partikulärer Form wurde mit Hilfe eines Geräts Autosizer IIC der Fa. Malvern nach ISO 13321 bestimmt und ergab ein Maximum bei 137 nm.

I. 2d) Hinzufügen einer Mischung von Comonomeren und weitere Copolymerisation

5 Minuten nach der Zugabe von tert.-Butylhydroperoxid und $HO-CH_2-SO_2Na$ gemäß Schritt I.1 c) wurde über einen Zeitraum von 90 Minuten eine Mischung zugegeben, die wie folgt zusammengesetzt war:

100 g vollentsalztes Wasser
13,4 g 28 Gew.-% wässrige Lösung von

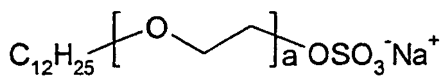

mit a = 3
6,6 g 56,5 Gew.-% wässsrige Lösung von Natrium-(di-2-ethylhexylsuccinat)-sulfonat (Natriumsalz von Sulfobernsteinsäuredi-2-ethylhexylester)
163,7 g n-Butylacrylat
75 g Styrol
3,8 g Acrylsäure
7,5 g Verbindung V a.1 ("MAMOL") als 15 Gew.-% Lösung in Wasser

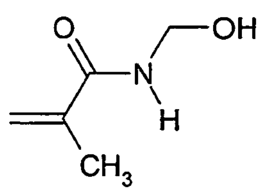

V a.1

Gleichzeitig wurde mit der Zugabe einer Lösung von 1,25 g $Na_2S_2O_8$ in 60 g Wasser begonnen, und die Zugabe wurde über einen Zeitraum von 105 Minuten durchgeführt. Während der Zugabe wurde die Temperatur bei 85°C gehalten.

Nach der Beendigung der Zugabe wurde noch 30 Minuten bei 85°C gerührt und anschließend zur Desodorierung simultan eine Lösung von 1,1 g tert.-Butylhydroperoxid (70 Gew.-% in Wasser) in 15 g destilliertem Wasser und eine Lösung von 0,7 g $HO-CH_2-O-SO_2Na$ in 15 g destilliertem Wasser über einen Zeitraum von 90 Minuten zudosiert.

Danach wurde auf Zimmertemperatur abgekühlt und mit etwa 4 g 25 Gew.-% wässrigem Ammoniak ein pH-Wert von 7 eingestellt.

Anschließend wurde die so erhältliche Dispersion über ein 120 μm-Netz und danach über ein 15 μm-Netz filtriert. Die Filtrationsdauer betrug 4 Minuten.

Man erhielt eine wässrige Dispersion, enthaltend erfindungsgemäß behandelte Pigmentpartikel. Der Feststoffgehalt betrug 37,8 Gew.-%, die dynamische Viskosität betrug 25 mPa·s. Die Teilchengrößenverteilung der wie oben beschrieben erhältlichen erfindungsgemäß behandelten Pigmentpartikel wurde durch Coulter Counter der Fa. Malvern nach ISO 13321 bestimmt und ergab ein Maximum bei 137 nm.

Das in einem separaten Versuch unter zu I. 1 d) analogen Bedingungen hergestellte Copolymer hatte Tg = -8°C. Messungen der Glastemperatur $T_g$ am erfindungsgemäß behandelten Pigment ergaben -2°C.

Beispiel I. 2. bis I. 10.

Beispiel I. 1 a) bis I. 1 c) wurde wiederholt. In Schritt d) wurde zweite Mischung von Comonomeren nach Tabelle 1 zugesetzt und nach zu I. 1 d) analogen Bedingungen copolymerisiert.

Man erhielt erfindungsgemäß behandelte Pigmente in partikulärer Form Nr. 2 bis 10.

Tabelle 1: Comonomerengemische aus den Schritten I. 2 d) bis 1. 10 d) sowie I. 1 d); Zahlenwerte entsprechen - wenn nicht ausdrücklich anders angegeben - Gew.-%, bezogen auf die Gesamtmenge der in Schitt d) eingesetzten Comonomeren

| Nr. | BA | EHA | EA | MMA | S | AN | MA Mol | GMA | BMA-acac | HPA | AM | MAM | AS | MAS | $T_g$ [°C] |
|---|---|---|---|---|---|---|---|---|---|---|---|---|---|---|---|
| I.2 d) | 65,5 | | | | 30,0 | | 3,0 | | | | | | 1, | | 5 -8 |
| I.3 d) | 63,5 | | | | 31,0 | | | | 5,0 | | | | 0,5 | | -14 |
| I.4 d) | 29,0 | 20,0 | | 8,0 | 36,3 | | 4,5 | | | | | | 2,2 | | 12 |
| I.5 d) | 37,0 | | | | 48,8 | 8,7 | 3,0 | | | | 0,5 | | | 2,0 | 32 |
| I.6 d) | 35,0 | | | 51,8 | | 7,0 | 3,2 | | | | 1,0 | | 2,0 | | 36 |
| I.7 d) | 14,5 | | 25,0 | 48,3 | | | | 5,0 | | 4,7 | | 2,5 | | | 35 |
| I.8 d) | 20,8 | | 20,0 | 53,0 | | | 2,5 | | | | | 2,5 | 1,2 | | 38 |
| I.9 d) | | 5,0 | 32,8 | 50,0 | | | | 5,0 | | 4,7 | | 2,5 | | | 42 |
| I.10 d) | 5,0 | | 30,8 | 58,0 | | | 2,5 | | | | | 2,5 | 1,2 | | 53 |
| I.11 d) | 10,0 | | 20,0 | 56,8 | | 7,0 | 3,2 | | | | 1,0 | | 2,0 | | 57 |

Verwendete Abkürzungen:

| | |
|---|---|
| BA | n-Butylacrylat |
| EHA | 2-Ethylhexylacrylat |
| EA | Ethylacrylat |
| MMA | Methylmethacrylat |
| S | Styrol |
| AN | Acrylnitril |
| MAMol | N-Methylolmethacrylamid |
| GMA | Glycidylmethacrylat |
| BMA-acac | 1,4-Butandiolmonoacrylat-Acetylacetat |
| HPA | Hydroxypropylacrylat |
| AM | Acrylamid |
| MAM | Methacrylamid |
| AS | Acrylsäure |
| MAS | Methacrylsäure |

I.1 d) Hinzufügen einer Mischung von Comonomeren und weitere Copolymerisation

5 Minuten nach der Zugabe von tert.-Butylhydroperoxid und HO-$CH_2$-$SO_2$H aus Schritt I.1 c) wurde über einen Zeitraum von 90 Minuten eine Mischung zugegeben, die wie folgt zusammengesetzt war:

| | |
|---|---|
| 130 g | vollentsalztes Wasser |
| 12,5 g 30 | Gew.-% wässrige Lösung von |

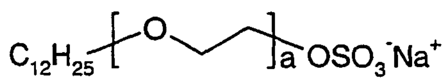

mit a = 3, 8,3 g 45 Gew.-% wässrige Lösung von Natrium-(di-2-ethylhexylsuccinat)-sulfonat (Natriumsalz von Sulfobernsteinsäuredi-2-ethylhexylester),

| | |
|---|---|
| 150 g | n-Butylacrylat |
| 88,7 g | Styrol |
| 3,8 g | Acrylsäure |
| 7,5 g | Verbindung V a.1 als 15 Gew.-% Lösung in Wasser |

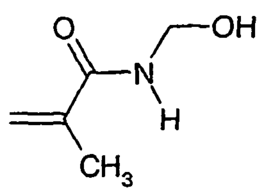

V a.1

Gleichzeitig wurde mit der Zugabe einer Lösung von 1,25 g $Na_2S_2O_8$ in 100 g Wasser begonnen, und die Zugabe wurde über einen Zeitraum von 105 Minuten durchgeführt. Während der Zugabe wurde die Temperatur bei 85°C gehalten.

Nach der Beendigung der Zugabe wurde noch 30 Minuten bei 85°C gerührt und anschließend zur Desodorierung simultan eine Lösung von 1,1 g tert.-Butylhydro-peroxid (70 Gew.-% in Wasser) in 25 g destilliertem Wasser und eine Lösung von 0,7 g NaO-$CH_2$-O-$SO_2$H in 25 g destilliertem Wasser über einen Zeitraum von 90 Minuten zudosiert.

Danach wurde auf Zimmertemperatur abgekühlt und mit 25 Gew.-% wässrigem Ammoniak ein pH-Wert von 7 eingestellt.

Anschließend wurde die so erhältliche Dispersion über ein 120 $\mu$m-Netz und danach über ein 15 $\mu$m-Netz filtriert.

Man erhielt eine wässrige Dispersion I.1 d), enthaltend erfindungsgemäß behandeltes Pigment in partikulärer Form. Der Feststoffgehalt betrug 34,6 Gew.-%, die dynamische Viskosität betrug 35 mPa·s. Die Teilchengrößenverteilung des wie oben beschrieben erhältlichen erfindungsgemäß behandelten Pigments in partikulärer Form ergab ein Maximum bei 135 nm. Die Bestimmung der Teilchengröße erfolgt mit Hilfe der Photonenkorrelationsspektroskopie (PCS), auch als quasielastische Lichtstreuung (QELS) bekannt.

Die Meßmethode ist in der ISO13321-Norm beschrieben. Hierbei wird eine verdünnte wässrige Polymerdispersion (c ~ 0,005 Gew.-%) untersucht.

I.13 d) Hinzufügen einer Mischung von Comonomeren und weitere Copolymerisation

Beispiel I.2d) wurde wiederholt, jedoch wurden die folgenden Monomeren zugesetzt:

| | |
|---|---|
| 20 g | Styrol |
| 118,7 g | Methylmethacrylat |
| 100 g | n-Butylacrylat |
| 3,8 g | Acrylsäure |
| 7,5 g | Methacrylamid. |

Man erhielt Dispersion I.13 d), enthaltend erfindungsgemäß behandeltes Pigment in partikulärer Form.

I.14 d) Hinzufügen einer Mischung von Comonomeren und weitere Copolymerisation

Beispiel I.12d) wurde wiederholt, jedoch ausgehend von I.2 c) statt I.1 c). Man erhielt Dispersion I.14 d), enthaltend erfindungsgemäß behandeltes Pigment in partikulärer Form.

II. Herstellen und Verdrucken erfindungsgemäßer Tinten, enthaltend erfindungsgemäß behandeltes Pigment in partikulärer Form

Aus einer nach Beispiel I.1d hergestellten wässrigen Dispersion, enthaltend erfindungsgemäß behandeltes Pigment in partikulärer Form, wurde eine Ink-Jet-Tinte nach dem folgenden Rezept durch Vermischen der folgenden Komponenten formuliert.

27 g Dispersion von erfindungsgemäß behandeltem Pigment in partikulärer Form nach Beispiel I.1d) (entsprechend 102 g Feststoff)

| | |
|---|---|
| 1,0 g | Harnstoff |
| 3,0 g | n-$C_4H_9$-O($CH_2CH_2O$)$_3$-H |
| 0,25 g | 2,4,7,9-Tetramethyl-5-decin-4,7-diol |
| 16,0 g | Glycerin |
| 0,25 g | Ethylenglykol |
| 52,5 | vollentsalztes Wasser |

Die Mischung wurde gerührt und in Ink-Jet-Kartuschen gefüllt.
Diese erfindungsgemäße Tinte zeigte eine dynamische Viskosität von 3,7 mPa·s und war zum Verdrucken in gängigen Druckern geeignet.

Nach dem Einbau der Kartusche in einen Piezo-Drucker (Epson 3000) wurde die erfindungsgemäße Tinte auf Baumwolle (100% Baumwolle 250 g / $m^2$)verdruckt.
Nach Trocknen an der Luft und Heißluftfixierung (150°C für 5 min) zeigte die bedruckten Baumwolle hervorragende Gebrauchsechtheiten.

| | |
|---|---|
| Reibechtheit trocken: | 4-5 |
| Reibechtheit nass: | 3-4 |
| Waschechtheit | 4 |

Der Griff der bedruckten Baumwolle war angenehm weich.

Die Reibechtheiten wurden nach DIN 54021, die Waschechtheit nach DIN 54011 bestimmt.

II. Textilkolorierung mit erfindungsgemäß behandeltem Pigment in partikulärer Form

II.1. Textilkolorierung mit erfindungsgemäß behandeltem Pigment in partikulärer Form gemäß Beispiel 1

60 g der gemäß Beispiel I.1 hergestellten Pigmentdispersion werden mit 6 g eines wasserlöslichen, statistischen Copolymers auf der Basis von 66% Acrylsäure und 34% Acrylsäureamid (Molmasse $M_w$ 60.000 g/mol) versetzt und auf 1 l mit entmineralisiertem Wasser aufgefüllt.

Die so erhaltene Färbeflotte wurde mittels einem Foulard, Hersteller Fa. Mathis, Typ Nr. HVF12085, auf eine 100%iges Baumwollgewebe aufgeklotzt. Die Flottenaufnahme betrug 85 %. Anschließend wurde das Baumwollgewebe 3 min bei 80°C getrocknet. Daran anschließend wurde das Baumwollgewebe 5 min bei 150°C fixiert Die Bestimmung der Echtheiten ergab:

| | |
|---|---|
| Reibechtheit trocken, DIN EN ISO 105 X 12 | 4 - 5 |
| Reibechtheit nass, DIN EN ISO 105 X 12 | 4 |
| Waschechtheit, DIN EN ISO 105 C 03 | 4 - 5 |
| Helizarin Reib-Bürst-Wäsche 3/5 | 4 - 5 |

Beispiel II. 2. bis II. 10.

Beispiel II.1. wurde wiederholt, jedoch mit den entsprechenden erfindungsgemäß behandelten Pigmenten 2 bis 10.

In Beispiel II.2., II.6. und II.8. wurde zur Herstellung der jeweiligen erfindungsgemäßen Färbeflotte zusätzlich 0,5 Äquivalente

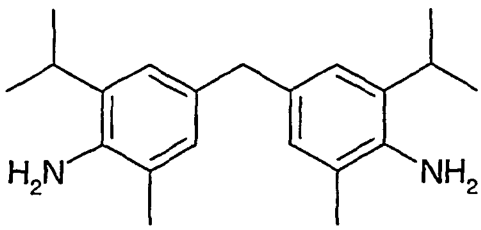

kommerziell erhältlich bei Lonza Grp. Lim., Schweiz als 50 Gew.-% Lösung in n-Butanol zugegeben.

Mit den erfindungsgemäß behandelten Pigmenten kolorierte Textilien wiesen eine ausgezeichnete Haptik auf. Es wurde gefunden, dass die erfindungsgemäß kolorierten Textilien auch nach mehrmaligem Waschen kein Ausbleichen durch Waschfaltenbruch zu beobachten war.

Mit erfindungsgemäß behandelten Pigmenten in der Art von Mischfarben kolorierte Textilien zeigen ausgezeichnete Brillanz bei vorzüglicher Egalität.

II. Anwendungsbeispiele: Kolorierungen von Leder

II.1. Herstellung von Schuhoberleder

Handelsübliches Schuhoberleder-Crust, hergestellt aus wet blue, wurde mit Lederfarbstoff gefärbt (5 Gew.-%, bezogen auf Crust-Trockengewicht, 1:10 verdünnt, Verweilzeit 60 Minuten im Fass bei 35°C).

Danach wurde mit der erfindungsgemäßen Dispersion I.12 d) eine Topfärbung durchgeführt:

500 Gewichtsteile Wasser auf 1 Gewichtsteil Schuhoberleder-Crust, 2,5 Gew.-% (bezogen auf Crust Trockengewicht) erfindungsgemäß behandeltes Pigment 1.12 d), 1:10 verdünnt, keine weiteren Zusätze, Verweilzeit im Fass 30 Minuten bei 50°C.

Danach wurde die Flotte ablassen, das Leder mit 200 Gewichtsteile Wasser nachgewaschen, Flotte abgelassen, das Leder 12 Stunden aufgebockt, ausreckt, hängegetrocknet, gestollt, 3 Stunden gemillt und gespannt.

Resultat war ein einwandfrei durchgefärbtes Leder mit optisch fehlerfreier Oberfläche.

III.2. Spritzfärbung von ungefärbtem Chrom-gegerbtem Rinder-Crustleder (anilinartige Färbung)

Es wurde eine Mischung bereitet aus:

| | |
|---|---|
| 200 g | erfindungsgemäß behandeltes Pigment I.14 d) in partikulärer Form, |
| 15 g | Tensid der Formel *cis*-$CH_3$-$(CH_2)_7$-CH=CH-$(CH_2)_8$-NH-$(CH_2CH_2O)_{12}$-OH und |
| 785 g | vollentsalztem Wasser. |

Auf einem ungefärbten Chrom-gegerbten Rinder-Crustleder wurde durch Spritzauftrag mit der Luftspritzpistole ein gleichmäßiger Oberflächenauftrag mit der oben beschriebenen Mischung durchgeführt, wobei man etwa 30 g/$m^2$ Rinder-Crustleder aufgetrug. Danach trocknete man das Leder bei 80°C und lagerte es anschließend einen Tag bei Normklima.

Es wurden folgende anwendungstechnische Eigenschaften festgestellt:

| | |
|---|---|
| Spritzbarkeit: | sehr gut |
| Lichtechtheit (DIN EN ISO 5-B02) | 4 |
| Wassertropfenechtheit IUF 420 | 5 |
| Migrationsechtheit nach DIN EN ISO 15701 | 4 bis 5 |
| Reibechtheit trocken VESLIC | 1000 |

## Patentansprüche

1. Verfahren zur Behandlung von Pigmenten in partikulärer Form, umfassend die folgenden Schritte:

   a) Vermischen von Pigment in partikulärer Form mit mindestens einem nicht-ionischen oberflächenaktiven Stoff,
   b) Dispergieren der so erhältlichen Mischung von Pigment in partikulärer Form und nicht-ionischem oberflächenaktiven Stoff in wässrigem Medium,
   c) Polymerisieren mindestens eines ersten Monomers oder Copolymerisation einer ersten Mischung von Comonomeren in Gegenwart einer Dispersion nach b), wobei wasserunlösliches Polymer oder Copolymer an der Oberfläche der Pigmente in partikulärer Form gebildet wird,
   d) Hinzufügen mindestens eines zweiten Monomers oder einer zweiten Mischung von Comonomeren und Polymerisation oder Copolymerisation.

2. Verfahren nach Anspruch 1, **dadurch gekennzeichnet, dass** in Schritt d) ein Polymer oder Copolymer mit einer Glastemperatur $T_g$ von etwa 0°C hergestellt wird.

3. Verfahren nach Anspruch 1, **dadurch gekennzeichnet, dass** in Schritt d) ein Polymer oder Copolymer mit einer Glastemperatur $T_g$ von 30°C oder höher hergestellt wird.

4. Verfahren nach Anspruch 1, **dadurch gekennzeichnet, dass** in Schritt d) ein Polymer oder Copolymer mit einer Glastemperatur $T_g$ von unter 20°C hergestellt wird.

5. Verfahren nach einem der Ansprüche 1 bis 4, **dadurch gekennzeichnet, dass** es sich bei Pigmenten in partikulärer Form um organische Pigmente handelt.

6. Verfahren nach einem der Ansprüche 1 bis 5, **dadurch gekennzeichnet, dass** es sich bei dem ersten Monomer um eine vinylaromatische Verbindung oder um eine Verbindung der allgemeinen Formel I

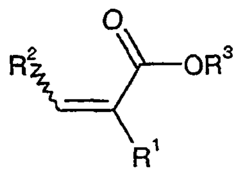

I

handelt, wobei in Formel I die Variablen wie folgt definiert sind:

$R^1$ gewählt aus Wasserstoff, unverzweigtem oder verzweigtem $C_1$-$C_{10}$-Alkyl,
$R^2$ gewählt aus Wasserstoff, unverzweigtem oder verzweigtem $C_1$-$C_{10}$-Alkyl,
$R^3$ gewählt aus unverzweigtem oder verzweigtem $C_4$-$C_{10}$-Alkyl.

**7.** Verfahren nach einem der Ansprüche 1 bis 6, **dadurch gekennzeichnet, dass** es sich bei der ersten Mischung von Comonomeren um eine Mischung aus mindestens einer vinylaromatischen Verbindung und mindestens einer Verbindung der allgemeinen Formel I handelt.

**8.** Verfahren nach einem der Ansprüche 1 bis 7, **dadurch gekennzeichnet, dass** in einer Verbindung der allgemeinen Formel I $R^1$ und $R^2$ gleich Wasserstoff gewählt werden.

**9.** Verfahren nach einem der Ansprüche 1 bis 8, **dadurch gekennzeichnet, dass** als zweites Monomer ein Monomer der allgemeinen Formel II zugesetzt wird,

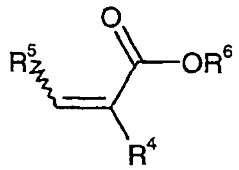

II

wobei die Variablen in Formel 11 wie folgt definiert sind:

$R^4$ gewählt aus Wasserstoff, unverzweigtem oder verzweigtem $C_1$-$C_{10}$Alkyl,
$R^5$ gewählt aus Wasserstoff, unverzweigtem oder verzweigtem $C_1$-$C_{10}$-Alkyl,
$R^6$ gewählt aus unverzweigtem oder verzweigtem $C_1$-$C_{10}$-Alkyl.

**10.** Verfahren nach einem der Ansprüche 1 bis 9, **dadurch gekennzeichnet, dass** die zweite Mischung von Comonomeren mindestens ein Monomer der allgemeinen Formel II enthält.

**11.** Verfahren nach einem der Ansprüche 1 bis 10, **dadurch gekennzeichnet, dass** in einer Verbindung der allgemeinen Formel II $R^4$ gleich Wasserstoff oder Methyl und $R^5$ gleich Wasserstoff gewählt werden.

**12.** Verfahren nach einem der Ansprüche 10 bis 11, **dadurch gekennzeichnet, dass** in der zweiten Mischung aus Comonomeren mindestens ein Comonomer, ausgewählt aus vinylaromatischer Verbindung und einer Verbindung der allgemeinen Formel I, enthalten ist.

**13.** Verfahren nach einem der Ansprüche 1 bis 12, **dadurch gekennzeichnet, dass** in Schritt d) bis zu 5 Gew.-%, bezogen auf die zweite Mischung von Comonomeren, mindestens einer Verbindung der Formel V a oder V b

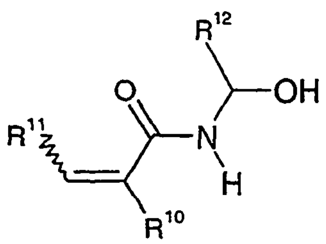

V a

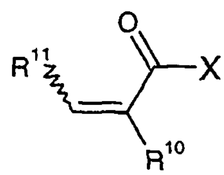

V b

enthalten sind, wobei die Variablen wie folgt definiert sind:

$R^{10}$ bis $R^{12}$ gleich oder verschieden und gewählt aus Wasserstoff und unverzweigtem oder verzweigtem $C_1$-$C_{10}$-Alkyl,
X gewählt aus Wasserstoff, Glycidyl, protonierbaren Gruppen mit tertiären Aminogruppen und enolisierbaren Gruppen mit 1 bis 20 C-Atomen.

**14.** Behandelte Pigmente in partikulärer Form, erhältlich nach einem Verfahren gemäß der Ansprüche 1 bis 13.

**15.** Verwendung von behandelten Pigmenten in partikulärer Form nach Anspruch 14 zur Herstellung von Farbmittelzubereitungen.

**16.** Verwendung von behandelten Pigmenten in partikulärer Form nach Anspruch 14 zur Herstellung von Tinten für das Ink-Jet-Verfahren.

**17.** Verwendung von wässrigen Dispersionen behandelter Pigmente in partikulärer Form nach Anspruch 14 als oder zur Herstellung von Tinten für das Ink-Jet-Verfahren.

**18.** Tinten für das Ink-Jet-Verfahren nach einem der Ansprüche 16 oder 17.

**19.** Verfahren zum Bedrucken von Substraten nach dem Ink-Jet-Verfahren unter Verwendung von Tinten nach Anspruch 18.

**20.** Verfahren nach Anspruch 19, **dadurch gekennzeichnet, dass** es sich um textile Substrate handelt.

**21.** Bedruckte Substrate, erhältlich nach Anspruch 19 oder 20.

**22.** Verwendung von behandelten Pigmenten in partikulärer Form nach Anspruch 14 zur Kolorierung von Textil oder Leder.

**23.** Verfahren zur Kolorierung von Textil, **dadurch gekennzeichnet, dass** man textile Substrate mit mindestens einem behandelten Pigment in partikulärer Form nach Anspruch 14 behandelt.

**24.** Färbeflotten für die Textilfärbung, enthaltend mindestens ein behandeltes Pigment in partikulärer Form nach Anspruch 14.

**25.** Druckpasten für den Textildruck, enthaltend mindestens ein behandeltes Pigment in partikulärer Form nach Anspruch 14.

**26.** Kolorierte textile Substrate, erhältlich nach einem Verfahren nach Anspruch 14.

**27.** Verwendung nach Anspruch 22, **dadurch gekennzeichnet, dass** es sich um eine Zurichtung von Leder handelt.

**28.** Verfahren zur Kolorierung von Leder, **dadurch gekennzeichnet, dass** man vorgefärbtes Leder mit mindestens einem behandelten Pigment in partikulärer Form nach Anspruch 14 behandelt.

**29.** Wässrige Grundierdispersionen, enthaltend mindestens ein behandeltes Pigment in partikulärer Form nach Anspruch 14, sowie mindestens einen der folgenden Bestandteile: mindestens ein Wachs, mindestens ein Biozid oder mindestens ein Bindemittel.

**30.** Koloriertes Leder, erhältlich nach einem Verfahren nach Anspruch 28.

**31.** Schuhe, hergestellt aus koloriertem Leder nach Anspruch 30.

## Claims

**1.** A process for treating pigments in particulate form comprising the following steps:

a) mixing pigment in particulate form with at least one nonionic surface-active substance,

b) dispersing the thus obtainable mixture of pigment in particulate form and nonionic surface-active substance in an aqueous medium,
c) addition polymerizing at least one first monomer or addition copolymerizing a first mixture of comonomers in the presence of a dispersion obtained after b) to form water-insoluble polymer or copolymer at the surface of the pigments in particulate form,
d) adding at least one second monomer or a second mixture of comonomers and addition polymerizing or copolymerizing.

**2.** The process according to claim 1 wherein a polymer or copolymer having a glass transition temperature $T_g$ of about 0°C is prepared in step d).

**3.** The process according to claim 1 wherein a polymer or copolymer having a glass transition temperature $T_g$ of 30°C or higher is prepared in step d).

**4.** The process according to claim 1 wherein a polymer or copolymer having a glass transition temperature $T_g$ of below 20°C is prepared in step d).

**5.** The process according to any of claims 1 to 4 wherein the pigments in particulate form are organic pigments.

**6.** The process according to any of claims 1 to 5 wherein said first monomer is a vinyl-aromatic compound or is a compound of the general formula I

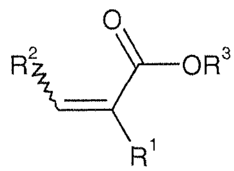

I

where

$R^1$ is selected from hydrogen, branched or unbranched $C_1$-$C_{10}$-alkyl,
$R^2$ is selected from hydrogen, branched or unbranched $C_1$-$C_{10}$-alkyl,
$R^3$ is selected from branched or unbranched $C_4$-$C_{10}$-alkyl.

**7.** The process according to any of claims 1 to 6 wherein said first mixture of comonomers is a mixture of at least one vinyl-aromatic compound and at least one compound of the general formula I.

**8.** The process according to any of claims 1 to 7 wherein $R^1$ and $R^2$ are both hydrogen in one compound of the general formula I.

**9.** The process according to any of claims 1 to 8 wherein said second monomer added is a monomer of the general formula II

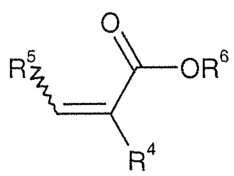

II

where

$R^4$ is selected from hydrogen, branched or unbranched $C_1$-$C_{10}$-alkyl,
$R^5$ is selected from hydrogen, branched or unbranched $C_1$-$C_{10}$-alkyl,

$R^6$ is selected from branched or unbranched $C_1$-$C_{10}$-alkyl.

**10.** The process according to any of claims 1 to 9 wherein said second mixture of comonomers comprises at least one monomer of the general formula II.

**11.** The process according to any of claims 1 to 10 wherein $R^4$ is hydrogen or methyl and $R^5$ is hydrogen in one compound of the general formula II.

**12.** The process according to either of claims 10 and 11 wherein said second mixture of comonomers comprises at least one comonomer selected from vinyl-aromatic compound and a compound of the general formula I.

**13.** The process according to any of claims 1 to 12 wherein step d) is carried out in the presence of up to 5% by weight, based on said second mixture of comonomers, of at least one compound of the formula V a or V b

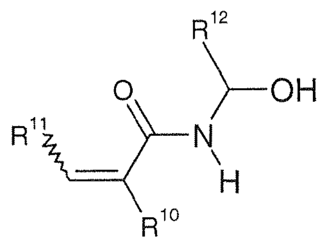

V a

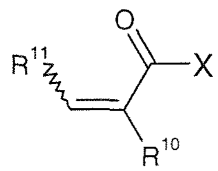

V b

where

$R^{10}$ to $R^{12}$ are the same or different and are each selected from hydrogen and branched or unbranched $C_1$-$C_{10}$-alkyl,
X is selected from hydrogen, glycidyl, protonatable groups having tertiary amino groups and enolizable groups having 1 to 20 carbon atoms.

**14.** Treated pigments in particulate form, obtainable by a process according to any of claims 1 to 13.

**15.** Use of treated pigments in particulate form according to claim 14 for producing colorant preparations.

**16.** Use of treated pigments in particulate form according to claim 14 for producing inks for the ink jet process.

**17.** Use of aqueous dispersions of treated pigments in particulate form according to claim 14 as or for producing inks for the ink jet process.

**18.** Inks for the ink jet process according to either of claims 16 or 17.

**19.** A process for printing substrates by the ink jet process using inks according to claim 18.

**20.** The process according to claim 19 wherein said substrates are textile substrates.

**21.** Printed substrates obtainable according to claim 19 or 20.

**22.** Use of treated pigments in particulate form according to claim 14 for coloration of textile or leather.

**23.** A process for coloration of textile, which comprises treating textile substrates with at least one treated pigment in particulate form according to claim 14.

**24.** A dyeing liquor for textile dyeing, comprising at least one treated pigment in particulate form according to claim 14.

**25.** A print paste for textile printing, comprising at least one treated pigment in particulate form according to claim 14.

**26.** A colored textile substrate obtainable by a process according to claim 14.

**27.** Use according to claim 22 wherein finishing of leather is concerned.

**28.** A process for coloration of leather, which comprises treating predyed leather with at least one treated pigment in particulate form according to claim 14.

**29.** An aqueous bottoming dispersion comprising at least one treated pigment in particulate form according to claim 14 and also at least one of the following constituents: at least one wax, at least one biocide or at least one binder.

**30.** Colored leather obtainable by a process according to claim 28.

**31.** Footwear produced from colored leather according to claim 30.

**Revendications**

**1.** Procédé de traitement de pigments sous forme particulaire, comprenant les étapes suivantes:

a) mélange d'un pigment sous forme particulaire à au moins une substance tensioactive non ionique,
b) dispersion du mélange ainsi obtenu du pigment sous forme particulaire et de la substance tensioactive non ionique en milieu aqueux,
c) polymérisation d'au moins un premier monomère ou copolymérisation d'un premier mélange de comonomères en présence d'une dispersion selon b), dans laquelle il se forme un polymère ou un copolymère non hydrosoluble à la surface des pigments sous forme particulaire, et
d) addition d'au moins un second monomère ou un second mélange de comonomères et polymérisation ou copolymérisation.

**2.** Procédé selon la revendication 1, **caractérisé en ce que** l'on fabrique à l'étape d) un polymère ou un copolymère avec une température de transition vitreuse $T_g$ d'environ 0 °C.

**3.** Procédé selon la revendication 1, **caractérisé en ce que** l'on fabrique à l'étape d) un polymère ou un copolymère avec une température de transition vitreuse $T_g$ de 30 °C ou plus.

**4.** Procédé selon la revendication 1, **caractérisé en ce que** l'on fabrique à l'étape d) un polymère ou un copolymère avec une température de transition vitreuse $T_g$ inférieure à 20 °C.

**5.** Procédé selon l'une quelconque des revendications 1 à 4, **caractérisé en ce que** les pigments sous forme particulaire sont des pigments organiques.

**6.** Procédé selon l'une quelconque des revendications 1 à 5, **caractérisé en ce que** le premier monomère est un composé vinylaromatique ou un composé de formule générale I :

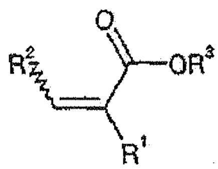

I

dans laquelle les variables sont définies de la manière suivante :

$R^1$ est choisi parmi l'hydrogène, un groupement alkyle en $C_1$-$C_{10}$, ramifié ou non,
$R^2$ est choisi parmi l'hydrogène, un groupement alkyle en $C_1$-$C_{10}$, ramifié ou non,
$R^3$ est choisi parmi des groupements alkyle en $C_4$-$C_{10}$, ramifiés ou non.

**7.** Procédé selon l'une quelconque des revendications 1 à 6, **caractérisé en ce que** le premier mélange de comonomères est un mélange d'au moins un composé vinylaromatique et d'au moins un composé de formule générale I.

**8.** Procédé selon l'une quelconque des revendications 1 à 7, **caractérisé en ce que**, dans un composé de formule générale I, on choisit l'hydrogène pour $R^1$ et $R^2$.

**9.** Procédé selon l'une quelconque des revendications 1 à 8, **caractérisé en ce que** l'on ajoute comme second monomère un monomère de formule générale II :

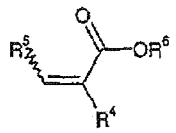

II

dans laquelle les variables sont définies de la manière suivante :

$R^4$ est choisi parmi l'hydrogène, un groupement alkyle en $C_1$-$C_{10}$, ramifié ou non,
$R^5$ est choisi parmi l'hydrogène, un groupement alkyle en $C_1$-$C_{10}$, ramifié ou non,
$R^6$ est choisi parmi des groupements alkyle en $C_1$-$C_{10}$, ramifiés ou non.

**10.** Procédé selon l'une quelconque des revendications 1 à 9, **caractérisé en ce que** le second mélange de comonomères contient au moins un monomère de formule générale II.

**11.** Procédé selon l'une quelconque des revendications 1 à 10, **caractérisé en ce que**, dans un composé de formule générale II, on choisit l'hydrogène ou un groupement méthyle pour $R^4$ et l'hydrogène pour $R^5$.

**12.** Procédé selon l'une quelconque des revendications 10 à 11, **caractérisé en ce que** le second mélange de comonomères contient au moins un comonomère choisi parmi un composé vinylaromatique et un composé de formule générale I.

**13.** Procédé selon l'une quelconque des revendications 1 à 12, **caractérisé en ce que** l'étape d) comprend jusqu'à 5 % en poids, par rapport au deuxième mélange de comonomères, d'au moins un composé de formule Va ou Vb :

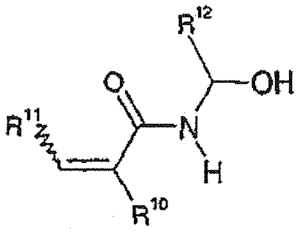

V a

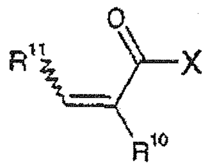

V b

dans lesquelles les variables sont définies de la manière suivante :

$R^{10}$ à $R^{12}$ sont identiques ou différents et choisis parmi l'hydrogène et un groupement alkyle en $C_1$-$C_{10}$, ramifié ou non,
X est choisi parmi l'hydrogène, un groupement glycidyle, des groupements protonables avec des groupements amino tertiaires et des groupements énolisables avec 1 à 20 atomes de carbone.

**14.** Pigments traités sous forme particulaire, que l'on peut obtenir selon un procédé selon les revendications 1 à 13.

**15.** Utilisation de pigments traités sous forme particulaire selon la revendication 14 pour la fabrication de préparations

colorantes.

**16.** Utilisation de pigments traités sous forme particulaire selon la revendication 14 pour la fabrication d'encres pour le procédé à jet d'encre.

**17.** Utilisation de dispersions aqueuses de pigments traités sous forme particulaire selon la revendication 14 comme encres pour le procédé à jet d'encre ou pour la fabrication de ces encres.

**18.** Encres pour le procédé à jet d'encre selon l'une quelconque des revendications 16 ou 17.

**19.** Procédé d'impression de substrats selon le procédé à jet d'encre en utilisant des encres selon la revendication 18.

**20.** Procédé selon la revendication 19, **caractérisé en ce qu'**il s'agit de substrats textiles.

**21.** Substrats imprimés que l'on peut obtenir selon les revendications 19 ou 20.

**22.** Utilisation de pigments traités sous forme particulaire selon la revendication 14 pour la coloration de textile ou de cuir.

**23.** Procédé de coloration de textile, **caractérisé en ce que** l'on traite des substrats textiles avec au moins un pigment traité sous forme particulaire selon la revendication 14.

**24.** Bains de coloration pour la coloration de textile, contenant au moins un pigment traité sous forme particulaire selon la revendication 14.

**25.** Pâtes d'impression pour l'impression de textile, contenant au moins un pigment traité sous forme particulaire selon la revendication 14.

**26.** Substrats textiles colorés que l'on peut obtenir par un procédé selon la revendication 14.

**27.** Utilisation selon la revendication 22, **caractérisée en ce qu'**il s'agit d'un corroyage pour le cuir.

**28.** Procédé de coloration de cuir, **caractérisé en ce que** l' on traite du cuir précoloré avec au moins un pigment traité sous forme particulaire selon la revendication 14.

**29.** Dispersions d'apprêt aqueuses contenant au moins un pigment traité sous forme particulaire selon la revendication 14 ainsi qu'au moins un des composants suivants : au moins une cire, au moins un biocide ou au moins un liant.

**30.** Cuir coloré que l'on peut obtenir par un procédé selon la revendication 28.

**31.** Chaussures fabriquées en cuir coloré selon la revendication 30.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9901516 A
- US 3133893 A
- US 4608401 A
- US 4680200 A
- US 3544500 A
- EP 1245653 A
- EP 0392352 A2


### In der Beschreibung aufgeführte Nicht-Patentliteratur


- **H. STACHE.** Tensid-Taschenbuch. Carl-Hanser-Verlag, 1981
- **MCCUTCHEON'S.** Emulsifiers & Detergents. MC Publishing Company, 1989
- *Text. Chem. Color,* 1987, vol. 19 (8), 23-29
- *TEXT. CHEM. COLOR,* 1989, vol. 21 (6), 27-32
- Ullmann's Enyclopedia of Industrial Chemistry. Textile Auxiliaries. Verlag Chemie, 1996, vol. A26, 286 ff, 296 ff
- **F. STATHER.** Gerbereichemie u. Gerbereitechnologie. Akademie Verlag, 1967, 507-632